# EUROPEAN PATENT APPLICATION

(11) **EP 1 672 838 A1**
(43) Date of publication of application: **21.06.2006**
(21) Application number: 04748230.2
(22) Date of filing: 28.07.2004
(51) Int. Cl.: H04L 12/28, H04B 7/26

(54) **RADIO TRANSMISSION SYSTEM FOR HIGH-SPEED MOBILE UNIT**

(30) Priority: 09.10.2003 JP 2003350389
(71) Applicant: MATSUSHITA ELECTRIC INDUSTRIAL CO., LTD., Kadoma-shi, Osaka 571-8501 (JP)
(72) Inventor: FUJIOKA, Atsushi, Matsushita Elect. Industr. Co., Osaka 540-6319 (JP); UBUKATA, Makoto, Matsushita Elect. Industr. Co., Osaka 540-6319 (JP); SENSUI, Toshihiro, Matsushita Elect. Industr. Co., Osaka 540-6319 (JP)
(74) Representative: Balsters, Robert
(86) International application number: PCT/JP2004/011126
(87) International publication number: WO 2005/036825

(57) **Abstract**

A high-speed moving object (100) includes: a first communication unit (101) which transmits image data captured by an image capturing unit (103) over radio wave of the first frequency (f1); and a second communication unit (102) which transmits the image data over radio wave of the second frequency (f2) in the similar manner. A base station (200) includes a communication unit (201) which transmits control data indicating a timing of transmission over radio wave of a predetermined frequency, and each of the base stations (200a, 200b ...) perform communication over radio wave of the first frequency (f1) and radio wave of the second frequency (f2). A control center (300) includes a selection unit (302) which selects one image data from a plurality of image data, when there are, among the image data transmitted from the base station (200), the plurality of image data that have been captured by the identical image capturing unit (103) at the same time.

## Description

### Technical Field

The present invention relates to a radio transmission system for a high-speed moving object in which data is transmitted between a high-speed moving object, such as a railroad train or a subway train, and a control center managing a condition of the high-speed moving object.

### Background Art

In recent years, a wireless local area network (LAN), which performs communication wirelessly using radio waves or light without using wired cables, has been widely used. As such a wireless LAN, there is, for example, a system which has a plurality of base stations in order to realize communication by switching the base stations even if a communicating terminal is moved.

As such a roaming method of wireless LAN, a high-speed roaming method of wireless LAN, by which the latest radio communication statuses of adjacent access points are recognized and when a radio communication status of the connecting access point is impaired, a connection operation is performed for an adjacent access point having the most reliable communication environment so that the roaming can be performed within a short time period, is suggested (Japanese Patent Laid-Open No. 2002-26931 publication, for example).

In the meantime, it has recently been conceived that, using such wireless LAN, image data taken by a television camera for capturing condition inside a running car in a high-speed moving object, such as a railroad train or a subway train, is transmitted via base stations to a control center and the condition inside the running car is displayed by a monitor or the like in the control center.

However, there is a problem in the above-described conventional wireless LAN system that when handover is performed to switch, to another base station, a base station installed at a railroad or subway station with which the car moving at a high speed is communicating, information for controlling the handover is necessary to be exchanged between the base stations, so that it takes a time to control the switching.

Further, in a case where image data is transmitted over a wireless LAN, for example, Institute of Electrical and Electronics Engineers (IEEE) 802.11b, re-transmission of a packet is repeated when an error occurs, so that real-time transmission cannot be performed. Still further, there is also a situation where a packet cannot be received due to restraints on the repeat numbers of the re-transmission, and such a situation results in loss of video. Furthermore, since a header is long and a protocol is complicated, use efficiency is not satisfactory.

### Disclosure of Invention

Thus, the present invention is conceived in view of the above circumstances, and an object of the present invention is to provide a radio transmission system which is for a high-speed moving object and by which high-speed handover at data transmission from the high-speed moving object can be realized and the data transmission can be properly performed.

In order to achieve the above object, a radio transmission system for a high-speed moving object, in which data is transmitted between the high-speed moving object and a control center that manages a condition of the high-speed moving object, the radio transmission system including: a first base station and a second base station installed alternately along a path of movement of the high-speed moving object, the first base station having a first communication unit operable to transmit data to and receive data from the high-speed moving object over radio wave of a first frequency, to transmit data to and receive data from the control center via a network; and the second base station having a second communication unit operable to transmit data to and receive data from the high-speed moving object over radio wave of a second frequency, to transmit data to and receive data from the control center via the network, wherein the high-speed moving object includes: a first communication unit operable to transmit and receive data over radio wave of the first frequency; and a second communication unit operable to transmit and receive data over radio wave of the second frequency, and the control center includes: a communication unit operable to transmit the data to and receive the data from the first and second base stations via the network; and a selection unit operable to select one data from a plurality of image data, when there are, among the received data, the plurality of image data having the same information.

Further, the first communication unit of the first base station may be operable to transmit control data indicating a transmission timing over radio wave of the first frequency at predetermined time intervals, and to receive data transmitted from the high-speed moving object over radio wave of the first frequency and transmit the data to the control center via the network; and the second communication unit of the second base station may be operable to transmit control data indicating a transmission timing over radio wave of the second frequency at predetermined time intervals, and to receive data transmitted from the high-speed moving object over radio wave of the second frequency and transmit the data to the control center via the network, wherein the high-speed moving object may include at least one image capturing unit operable to capture image of inside of a car in the high-speed moving object, the first communication unit is operable to transmit image data captured by the image capturing unit as the data over radio wave of the first frequency, when the control data is received over radio wave of the first frequency, the second communication unit is operable to transmit image data captured by the image capturing unit over radio wave of the second frequency, when the control data is received over radio wave of the second frequency, and the selection unit of the base station is operable to select one image data from a plurality of image data, when there are, among the data, the plurality of image data that have been captured by the identical image capturing unit at the same time, and the control center may include a display unit operable to display the received image data or the selected image data, for each of the image capturing unit.

Thereby the high-speed moving object is in a status where the high-speed moving object can receive radio waves of the first frequency and the second frequency at any time, and when control data is received from a base station over the radio wave of the first frequency or the radio wave of the second frequency, image data is transmitted over the radio wave of the first frequency or the radio wave of the second frequency, respectively. This means that when the high-speed moving object receives the control data from the base station over both of the radio wave of the first frequency and the radio wave of the second frequency, the high-speed moving object transmits the same image data over both of the radio wave of the first frequency and the radio wave of the second frequency, and the control center selects, from the two image data, image data having better image quality, so that the image data can be transmitted without processing for switching the base stations to communicate with the high-speed moving object.

Still further, the high-speed moving object may further include: a position detection unit operable to detect a running position of the high-speed moving object; and a control unit operable to control a characteristic at a time when the first and second communication units transmit and receive the data, based on the detected running position of the high-speed moving object.

This prevents, for example, that radio waves do not reach thereby causing communication impair or that radio waves reach too far thereby disturbing other base stations, so that communication statuses of the base stations can be maintained most suitably.

Still further, the control center may further include a setting unit operable to transmit, to the high-speed moving object, a characteristic table in which the running position of the high-speed moving object corresponds to the characteristic, and the control unit of the high-speed moving object may be operable to control the characteristic at a time when the first and second communication units transmit the data, based on the detected running position of the high-speed moving object and the characteristic table.

Thereby it is possible to easily adjust the system when the characteristic table for the high-speed moving object or the like is initialized, or when the characteristic table is changed, for example.

Still further, the control center may further include: a position detection unit operable to detect a position of the high-moving object; and a control unit operable to perform transmission instruction by instructing the first and second base stations to transmit the control data, based on the detected position of the high-speed moving object, and the first and second communication units of the first and second base stations are operable to transmit the control data according to the transmission instruction from the control center.

Thereby the first and second base stations do not transmit radio waves in a case where the high-speed moving object does not exist in respective corresponding respective areas, which prevents from disturbing other wireless communication using the same frequency, so that it is possible to improve use efficiency of radio waves.

Still further, the high-speed moving object may include: the first directional antenna operable to transmit and receive radio wave in a particular direction, the first directional antenna being connected to the first communication unit, being located at one end part in a moving direction of the high-speed moving object, and facing outside; and the second directional antenna operable to transmit and receive radio wave in a particular direction, the second directional antenna being connected to the second communication unit, being located at the other end part in the moving direction of the high-speed moving object, and facing outside, and the first and second base stations may include: a first directional antenna operable to transmit and receive radio wave in a particular direction, the first directional antenna being located at one end part in a longitudinal direction of a station platform where the base station is equipped and facing the first directional antenna of the high-speed moving object; and a second directional antenna operable to transmit and receive radio wave in a particular direction, the second directional antenna being located at the other end part in the longitudinal direction of the station platform where the base station is equipped and facing the second directional antenna of the high-speed moving object, the first communication unit of the first base station and the second communication unit of the second base station are connected to the first directional antenna and the second directional antenna of the base station, and operable to transmit control data indicating a transmission timing at predetermined time intervals via the first directional antenna of the base station over radio wave of a first frequency and via the second directional antenna of the base station over radio wave of the second frequency, and to receive data transmitted from the high-speed moving object over radio wave of the first frequency and radio wave of the second frequency and transmit the data to the control center via the network.

Thereby each base station communicates with the high-speed moving object via the directional antenna over radio wave of the first frequency f1 and radio wave of the second frequency f2, so that a reachable distance of the radio wave becomes longer in comparison with a reachable distance by a non-directional antenna, thereby reducing the number of antennae to be installed, which makes it possible to perform communication by, for example, installing a base station only at a railroad or subway station. Moreover, the reduction of the number of antennae can restrain influence from others.

Still further, the high-speed moving object may further includes: the first directional antenna operable to transmit and receive radio wave in a particular direction, the first directional antenna being connected to the first communication unit, being located at one end part in a moving direction of the high-speed moving object, and facing outside; and the second directional antenna operable to transmit and receive radio wave in a particular direction, the second directional antenna being connected to the second communication unit, being located at the other end part in the moving direction of the high-speed moving object, and facing outside, the first and second base stations may further include: a first directional antenna operable to transmit and receive radio wave in a particular direction, the first directional antenna being located at one end part in a longitudinal direction of a station platform where the base station is equipped and facing the first directional antenna of the high-speed moving object; a second directional antenna operable to transmit and receive radio wave in a particular direction, the second directional antenna being located at the other end part in the longitudinal direction of the station platform where the base station is equipped and facing the second directional antenna of the high-speed moving object; a third directional antenna operable to transmit and receive radio wave in a particular direction, the third directional antenna being located at back on to the first directional antenna of the base station and facing the second directional antenna of the high-speed moving object; and a fourth directional antenna operable to transmit and receive radio wave in a particular direction, the fourth directional antenna being located at back on to the second directional antenna of the base station and facing the first directional antenna of the high-speed moving object, the first communication unit of the first base station and the second communication unit of the second base station are connected to the first directional antenna and the third directional antenna of each of the base station, and operable to transmit control data indicating a transmission timing at predetermined time intervals via the first directional antenna of the base station over radio wave of the first frequency and via the third directional antenna of the base station over radio wave of the second frequency, and to receive data transmitted from the high-speed moving object over radio wave of the first frequency and radio wave of the second frequency and transmit the data to the control center via the network, and the first and second base stations may further include a third communication unit connected to the second directional antenna and the fourth directional antenna of the base station and operable to transmit control data indicating a transmission timing at predetermined time intervals via the second directional antenna of the base station over radio wave of the second frequency and via the fourth directional antenna of the base station over radio wave of the first frequency, in synchronization with one of the first communication unit and the second communication unit in order to transmit the control data alternately with the control data transmitted by one of the first communication unit and the second communication unit.

Thereby even if, for example, a car in the high-speed moving object is stopped at a station platform, it is possible to communicate with other high-speed moving objects. Moreover, even if, for example, there is a radio wave interference source at the station platform, the directional antenna has directivity by which the directional antenna is not affected by the interference source, so that it is possible to perform reliable communication between the high-speed moving object and the base station.

Still further, the high-speed moving object may further includes: a first directional antenna operable to transmit and receive radio wave in a particular direction, the first directional antenna being connected to the first communication unit, being located at one end part in a moving direction of the high-speed moving object, and facing outside; and the second directional antenna operable to transmit and receive radio wave in a particular direction, the second directional antenna being connected to the second communication unit, being located at the other end part in the moving direction of the high-speed moving object, and facing outside, and wherein the first and second base stations may include: a first directional antenna operable to transmit and receive radio wave in a particular direction, the first directional antenna being located at one end part in a longitudinal direction of a station platform where the first or second base station is equipped and facing a directional antenna of the high-speed moving object; and a second directional antenna operable to transmit and receive radio wave in a particular direction, the second directional antenna being located at the other end part in the longitudinal direction of the station platform where the first or second base station is equipped and facing a second directional antenna of the high-speed moving object, and the first communication unit of the first base station is connected to the first directional antenna and the second directional antenna of the base station, and operable to transmit control data indicating a transmission timing at predetermined time intervals via the first directional antenna of the base station over radio wave of the first frequency and via the second directional antenna of the base station over radio wave of a fourth frequency, and to receive data transmitted from the high-speed moving object over radio wave of the first frequency and radio wave of the fourth frequency and transmit the data to the control center via the network, the second communication unit of the second base station is connected to the first directional antenna and the second directional antenna of the base station, and operable to transmit control data indicating a transmission timing at predetermined time intervals via the first directional antenna of the base station over radio wave of the third frequency and via the second directional antenna of the base station over radio wave of the second frequency, and to receive data transmitted from the high-speed moving object over radio wave of the third frequency and radio wave of the second frequency and transmit the data to the control center via the network, the first communication unit is operable to transmit the data over radio wave of a corresponding frequency in the first frequency and the third frequency, when the control data is received over radio wave of one of the first frequency and the third frequency, and the second communication unit is operable to transmit the data over radio wave of a corresponding frequency in the fourth frequency and the second frequency, when the control data is received over radio wave of one of the fourth frequency and the second frequency.

Still further, the high-speed moving object may further includes: a third communication unit operable to transmit the data over radio wave of the third frequency, when the control data is received over radio wave of the third frequency; a fourth communication unit operable to transmit the data over radio wave of the fourth frequency, when the control data is received over radio wave of the fourth frequency; a first directional antenna connected to the first communication unit and a third directional antenna connected to the third communication unit, each of which is operable to transmit and receive radio wave in a particular direction, located at one end part in the moving direction of the high-speed moving object, and facing outside; and a second directional antenna connected to the second communication unit and a fourth directional antenna connected to the fourth communication unit, each of which is operable to transmit and receive radio wave in a particular direction, located at the other end part in the moving direction of the high-speed moving object, and facing outside, and the fist and second base stations may include: a first directional antenna operable to transmit and receive radio wave in a particular direction, the first directional antenna being located at one end part in a longitudinal direction of a station platform where the first or second base station is equipped and facing the first directional antenna of the high-speed moving object; and a second directional antenna operable to transmit and receive radio wave in a particular direction, the second directional antenna being located at the other end part in the longitudinal direction of the station platform where the first or second base station is equipped and facing the second directional antenna of the high-speed moving object, wherein the first communication unit of the first base station is connected to the first directional antenna and the second directional antenna, and operable to transmit control data indicating a transmission timing at predetermined time intervals via the first directional antenna over radio wave of the first frequency and via the second directional antenna over radio wave of the fourth frequency, and to receive data transmitted from the high-speed moving object over radio wave of the first frequency and radio wave of the fourth frequency and transmit the data to the control center via the network, and the second communication unit of the second base station is connected to the first directional antenna and the second directional antenna, and operable to transmit control data indicating a transmission timing at predetermined time intervals via the first directional antenna over radio wave of the third frequency and via the second directional antenna over radio wave of the second frequency, and to receive data transmitted from the high-speed moving object over radio wave of the third frequency and radio wave of the second frequency and transmit the data to the control center via the network.

Thereby it is possible to prevent that radio wave reaches too far due to an installation situation thereby disturbing radio wave of an adjacent base station, as in a case where, for example, each of the adjacent base stations uses radio waves of the same two kinds of frequencies.

Still further, the high-speed moving object may includes a plurality of Units which are connected to one another, the Unit having the first directional antenna, the second directional antenna, the third directional antenna, the fourth directional antenna, the first communication unit, the second communication unit, the third communication unit, and the fourth communication unit, the directional antenna located at an end part where one of the Unit is connected to another Unit is used for communication between the Units, and the directional antennae located at both end parts of a whole structure in which the plurality of the Units are connected to one another are used for communication with the first base station and the second base station.

Thereby, in a case where the high-speed moving object includes a plurality of Units, radio wave of frequency and a communication unit, which are not used for communication between the high-speed moving object and the base station, are used between the Units, so that transmission between the units can be performed without installing an additional transmission device such as a cable.

Note that the present invention can be realized not only as the above-described radio transmission system for the high-speed moving object but also as a radio transmission method for the high-speed moving object which uses as steps the characteristic means included in the above-described radio transmission system for the high-speed moving object, or as a program which causes a computer to execute these steps. Note also that it is apparent that such a program can be distributed via a recording medium such as a CD-ROM or a transmission medium such as the Internet.

As apparent from the above description, according to the radio transmission system for the high-speed moving object of the present invention, image data can be transmitted without processing for switching base stations to communicate with the high-speed moving object, so that high-speed handover at data transmission from the high-speed moving object can be realized and the data transmission can be performed properly.

Note also that each base station communicates with the high-speed moving object via the directional antenna over radio wave of the first frequency f1 and radio wave of the second frequency f2, so that a reachable distance of the radio wave becomes longer in comparison with a reachable distance by a non-directional antenna, thereby reducing the number of antennae to be installed, which makes it possible to perform communication by installing base stations only at railroad or subway stations, for example. Moreover, the reduction of the number of antennae can restrain influence from others.

### Brief Description of Drawings

FIGS. 1A and 1B are schematic diagrams showing a system structure of a radio transmission system for a high-speed moving object according to the first embodiment of the present invention.
FIG. 2 is a block diagram showing an internal structure of each element of the radio transmission system for the high-speed moving object according to the first embodiment of the present invention.
FIG. 3 is a schematic diagram showing inside of a car in the high-speed moving object according to the first embodiment of the present invention.
FIG. 4 is a schematic block diagram showing concept of an access control method according to the first embodiment of the present invention.
FIG. 5 is a schematic block diagram showing concept of an error correcting system according to the first embodiment of the present invention.
FIG. 6 is a flowchart showing an operation performed by the high-speed moving object according to the first embodiment of the present invention.
FIG. 7 is a flowchart showing an operation performed by a control center according to the first embodiment of the present invention.
FIGS. 8A and 8B are schematic diagrams showing a system structure of a radio transmission system for a high-speed moving object according to the second embodiment of the present invention, and more specifically schematic diagrams showing a whole structure (FIG. 8A) and a car structure in the high-speed moving object (FIG. 8B).
FIG. 9 is a block diagram showing an internal structure of each element of the radio transmission system for the high-speed moving object according to the second embodiment of the present invention.
FIG. 10 is a schematic diagram showing a system structure of a radio transmission system for a high-speed moving object according to the third embodiment of the present invention.
FIGS. 11A and 11B are schematic diagrams showing a system structure of a radio transmission system for a high-speed moving object according to the fourth embodiment of the present invention, and more specifically schematic diagrams showing a whole structure (FIG. 11A) and a car structure in the high-speed moving object (FIG. 11B).
FIG. 12 is a block diagram showing an internal structure of each element of the radio transmission system for the high-speed moving object according to the fourth embodiment of the present invention.
FIGS. 13A and 13B are schematic diagrams showing a system structure of a radio transmission system for a high-speed moving object according to the fifth embodiment of the present invention, and more specifically schematic diagrams showing a whole structure (FIG. 13A) and a car structure in the high-speed moving object (FIG. 13B).
FIG. 14 is a block diagram showing an internal structure of each element of the radio transmission system for the high-speed moving object according to the fifth embodiment of the present invention.
FIG. 15 is an explanatory diagram showing a corresponding relationship among a position of the high-speed moving object, a frequency of radio wave used in communication between the high-speed moving object and the base station, and a frequency of radio wave used in communication between Units (on an inbound line and an outbound line), regarding the radio transmission system for the high-speed moving object according to the fifth embodiment of the present invention.
FIG. 16 is a block diagram showing an internal structure of a high-speed moving object in a radio transmission system for the high-speed moving object according to the sixth embodiment of the present invention.
FIG. 17 is a schematic diagram showing one example of a characteristic table which a control unit has.
FIG. 18 is a flowchart showing an operation when the high-speed moving object determines output strength of radio wave, according to the sixth embodiment of the present invention.
FIG. 19 is a block diagram showing another internal structure of the high-speed moving object according to the sixth embodiment of the present invention.
FIG. 20 is a block diagram showing an internal structure of a control center in a radio transmission system for a high-speed moving object according to the seventh embodiment of the present invention.
FIG. 21 is a flowchart showing an operation when a control center determines a base station to transmit control data, according to the seventh embodiment of the present invention.
FIG. 22 is a block diagram showing an internal structure of a control center in a radio transmission system for a high-speed moving object according to the eighth embodiment of the present invention.

### Best Mode for Carrying Out the Invention

The following describes each embodiment according to the present invention with reference with the drawings.

### (First Embodiment)

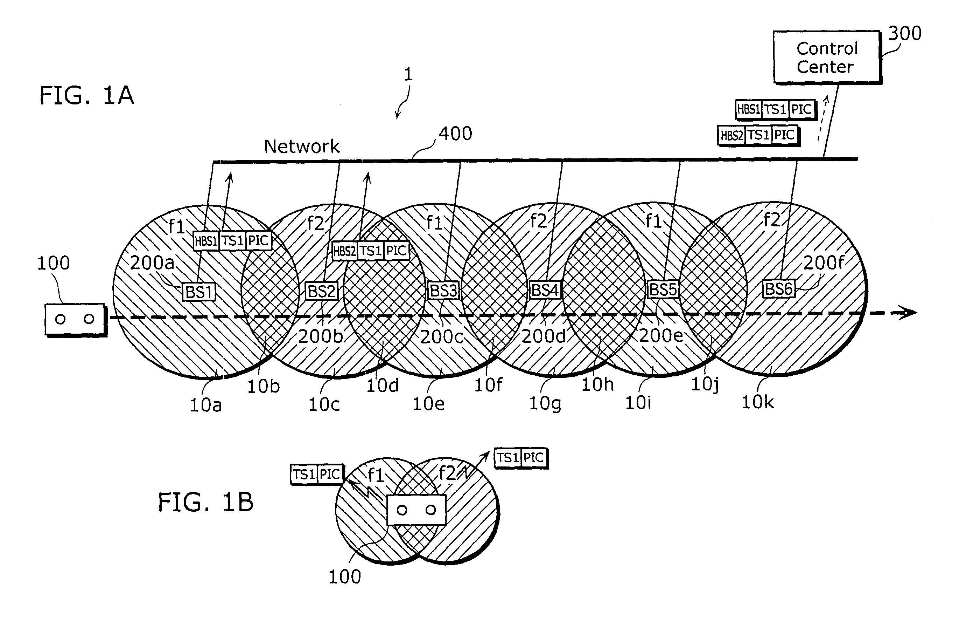

FIGS. 1A and 1B are schematic diagrams showing a system structure of a radio transmission system for a high-speed moving object according to the first embodiment of the present invention. This radio transmission system 1 for a high-speed moving object is a system for transmitting image data, in which inside of a car of a high-speed moving object 100 is captured, to a control center 300 managing condition of the high-speed moving object 100, and the radio transmission system 1 includes: the high-speed moving object 100 which runs along a track; the control center 300 which manages the condition of the high-speed moving object; and a base station (BS) 200 which is installed at a station of railroad, subway, or the like. Here, the control center 300 and the base station 200 are connected to each other via a network 400.

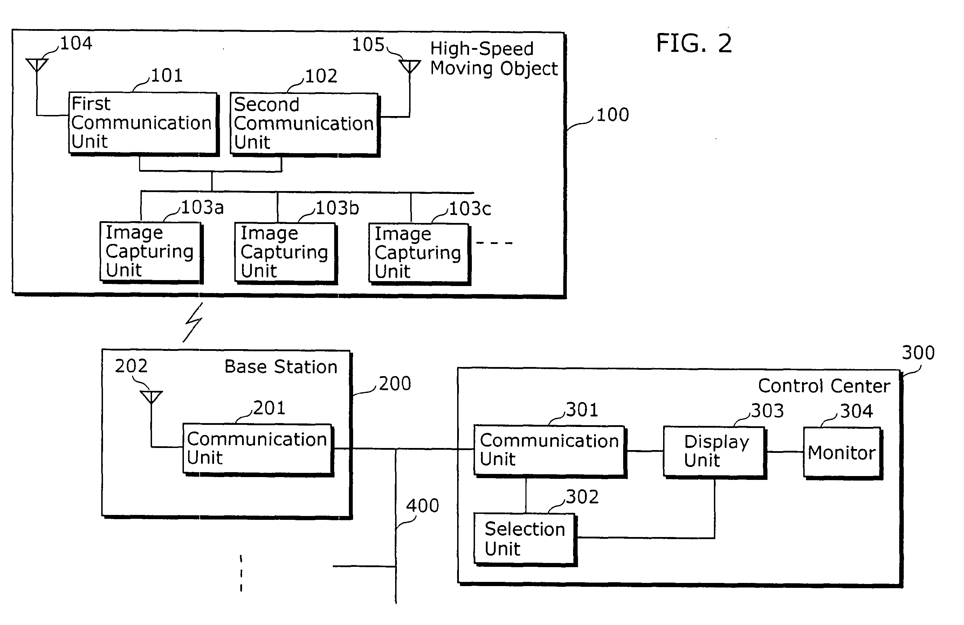

FIG. 2 is a block diagram showing an internal structure of each element of the above radio transmission system for the high-speed moving object.

The high-speed moving object 100 is, for example, a train of railroad, subway, or the like running along a track, having one or more cars, and the high-speed moving object 100 includes a first communication unit 101, a second communication unit 102, a plurality of image capturing units 103a, 103b, 103c, ..., and antennae 104 and 105.

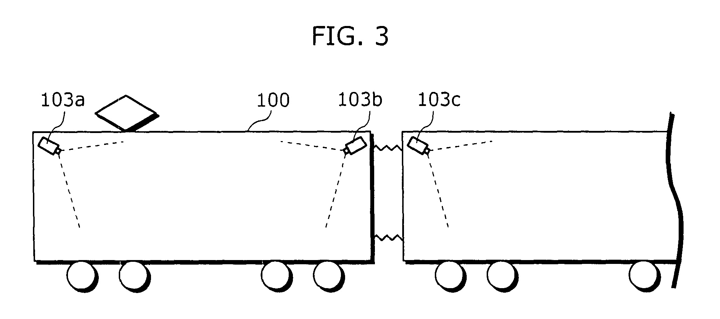

The image capturing unit 103 is, for example, a television camera and captures image of inside of the car in the high-speed moving object 100 as shown in FIG. 3. When the first communication unit 101 receives control data from the base station 200 over radio wave of the first frequency f1, the first communication unit 101 transmits image data (picture) captured by the image capturing unit 103 over radio wave of the first frequency f1. When the second communication unit 102 receives control data from the base station 200 over radio wave of the second frequency f2, the second communication unit 102 transmits image data captured by the image capturing unit 103 over radio wave of the second frequency f2.

The base station 200 is an apparatus which communicates with the high-speed moving object 100 and the control center 300, and includes a communication unit 201 and an antenna 202.

The communication unit 201 transmits control data indicating a timing of transmission over radio wave of a predetermined frequency at predetermined time intervals. In addition, the communication unit 201 receives image data transmitted from the high-speed moving object 100 over radio wave of the predetermined frequency and transmits the image data to the control center 300 via the network 400. Note that BS1 and BS2 in data to be transmitted in FIG. 1A are packet headers added by the base stations.

The base stations 200a, 200b, 200c, ... perform communication over radio wave of the first frequency f1 and radio wave of the second frequency f2 alternately. In other words, in the example shown in FIG. 1A, the base stations 200a, 200c, and 200e perform communication over radio wave of the first frequency f1, while the base stations 200b, 200d, and 200f perform communication over radio wave of the second frequency f2.

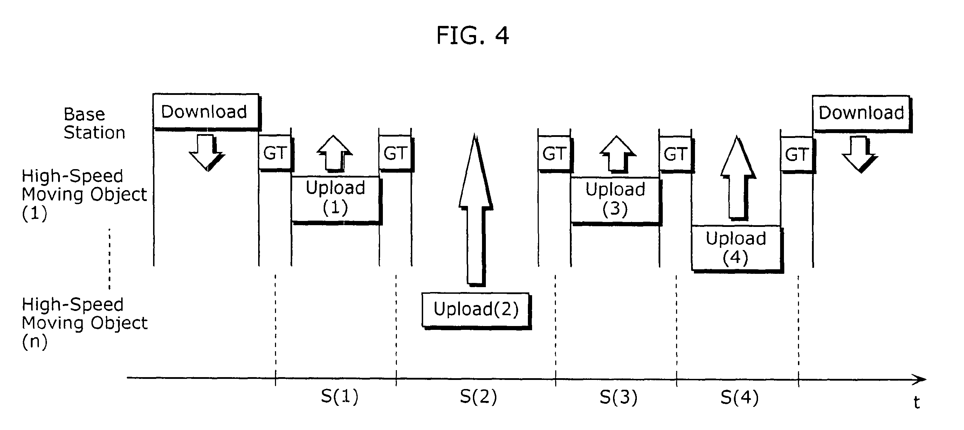

As an access control system used in the communication between the high-speed moving object 100 and the base station 200, a time division multiplexing system is used. By this time division multiplexing system, as shown in FIG. 4 for example, communication is performed by dividing each frame into time slots S(1) to S(4), using control data (download) transmitted from the communication unit 201 of the base station 200 as a reference timing. When the control data is received from the communication unit 201, the first communication unit 101 and the second communication unit 102 in the high-speed moving object 100 transmit image data using respective time slots designated by the control data. Here, in order to prevent transmission overlap, a guard time (GT) which is a null-signal sequence is set. In addition, the first communication unit 101 and the second communication unit 102 transmit respective time information (time stamp (TS)) indicating a time when the image capturing unit 103 captures the image data, together with the image data.

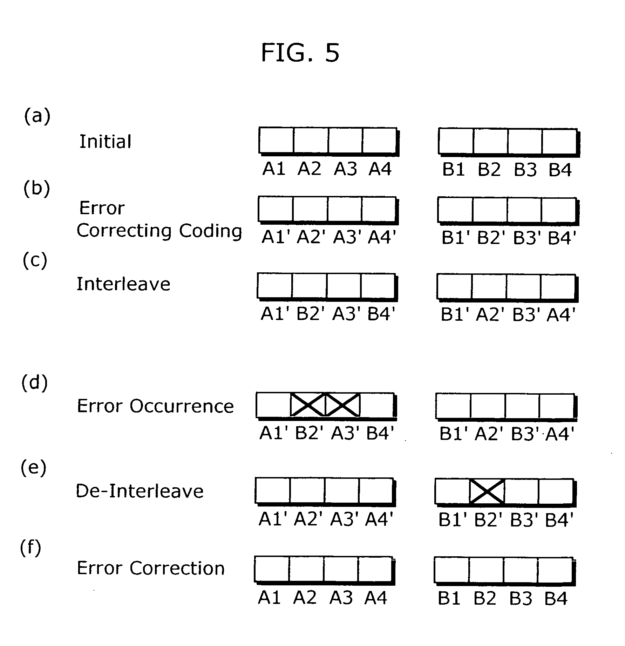

Moreover, as a processing system performed when an error is occurred in the communication between the high-speed moving object 100 and the base station 200, an error correcting system is use. FIG. 5 is a schematic block diagram showing concept of the error correcting system. By this error correcting system, for example, data shown in FIG. 5 (b) is generated by adding error-correction data to an initial data shown in FIG. 5 (a), interleaving is performed to arrange and intersperse an order of continuous data in the generated data in order to generate data shown in FIG. 5 (c), and after that the data is transmitted. De-interleaving is performed for the transmitted data shown in FIG. 5 (d) in order to generate data shown in FIG. 5 (e). Error correction is performed based on error-correction data added to the data in order to generate data shown in FIG. 5 (f). By using such an error correcting system, even if, for example, an error is occurred and "B2"' and "A3"' are lost as shown in FIG. 5 (d), an initial data can be generated.

More specifically, for example, image data of 180 bytes is added with error-correction data of 24 bytes to generate data of 204 bytes. Next, for the data of 204 bytes, an order of the continuous data is interleaved per unit byte, so that data of 204 bytes can be newly generated and transmitted.

The control center 300 is a center which manages condition of the high-speed moving object 100, and includes a communication unit 301, a selection unit 302, a display unit 303, and a monitor 304 such as a liquid crystal display device or a CRT.

The communication unit 301 communicates with the base station 200 via the network 400.

The display part 303 displays image data transmitted from each base station 200 via the network, onto the monitor 304 for every image capturing unit 103.

When there are, among the image data transmitted from the base stations 200, a plurality of image data that are captured at the same time by the same image capturing unit 103, the selection unit 302 selects one image data from the plurality of image data.

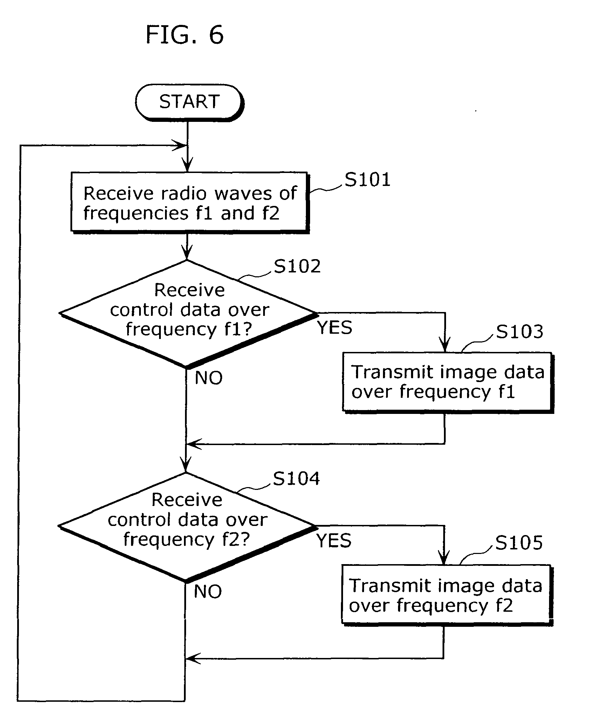

Next, an operation performed by the high-speed moving object 100 in the radio transmission system for the high-speed moving object having the above-described structure is described. FIG. 6 is a flowchart showing an operation performed by the high-speed moving object 100.

The first communication unit 101 and the second communication unit 102 receive radio wave of a first frequency f1 and radio wave of a second frequency f2, respectively (Step S101). The first communication unit 101 determines whether or not control data is received from the base station 200 over radio wave of the first frequency f1 (Step S102). Here, if control data is received from the base station 200 (YES at Step S102), then the first communication unit 101 transmits image data captured by the image capturing unit 103 over radio wave of the first frequency f1 (Step S103). On the other hand, if control data is not received from the base station 200 (NO at Step S102), then the first communication unit 101 does not transmit the image data over radio wave of the first frequency f1.

At the same time, the second communication unit 102 determines whether or not control data is received from the base station 200 over radio wave of the second frequency f2 (Step S104). Here, if control data is received from the base station 200 (YES at Step S104), then the second communication unit 102 transmits image data captured by the image capturing unit 103 over radio wave of the second frequency f2 (Step S105). On the other hand, if control data is not received from the base station 200 (NO at Step S104), then the second communication unit 102 does not transmit the image data over radio wave of the second frequency f2.

This means that the high-speed moving object 100 is in a status where the high-speed moving object 100 can receive radio wave of the first frequency f1 and radio wave of the second frequency f2 at any time, and when control data is received from the base station 200 over both of radio wave of the first frequency f1 and radio wave of the second frequency f2, the high-speed moving object 100 transmits the same image data over both of radio wave of the first frequency f1 and radio wave of the second frequency f2.

Moreover, an area where the radio wave of the first frequency f1 can be transmitted and received and an area where the radio wave of the second frequency f2 can be transmitted and received are partly overlapped with each other, due to radio waves transmitted and received by base stations 200 adjacent to each other, as shown in FIG. 1A. Therefore, the high-speed moving object 100 performs, depending on a position of the high-speed moving object 100, one of: transmitting and receiving over only radio wave of the first frequency f1; transmitting and receiving over only radio wave of the second frequency f2; and transmitting and receiving over both of the radio wave of the first frequency f1 and the radio wave of the second frequency f2. For example, in areas 10a, 10e, and 10i shown in FIG. 1A, the high-speed moving object 100 performs transmitting and receiving over only radio wave of the first frequency f1. In areas 10c, 10g, and 10k, the high-speed moving object 100 performs transmitting and receiving over only radio wave of the second frequency f2. In areas 10b, 10d, 10f, 10h, and 10j, the high-speed moving object 100 performs transmitting and receiving over both of radio wave of the first frequency f1 and radio wave of the second frequency f2.

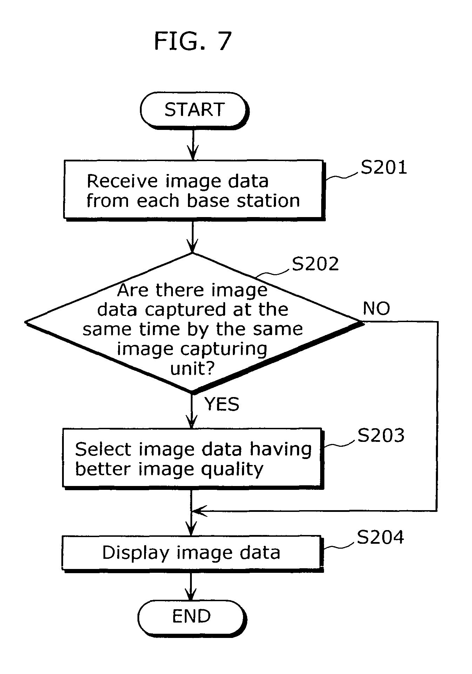

Next, an operation performed by the control center 300 is described. FIG. 7 is a flowchart showing an operation performed by the control center 300.

The communication unit 301 receives image data transmitted from each base station 200 via the network 400 (Step S201). The selection unit 302 determines whether or not there are, among the image data received by the communication unit 301, a plurality of image data that are captured at the same time by the same image capturing unit 103 (Step S202). Here, the selection unit 302 determines, based on each time stamp added to each image data, whether or not those image data are captured at the same time. In addition, the selection unit 302 determines whether or not those data are captured by the same image capturing unit 103, based on each time stamp and each camera ID for identifying a car and an image capturing unit, for example, which are added to each image data.

As a result of the determination, if there are two or more image data that are captured at the same time and by the same image capturing unit 103, then the selection unit 302 selects, from the two image data, image data having better image quality (Step S203). The display part 303 displays onto the monitor 304 image data selected by the selection unit 302 (Step S204). On the other hand, if there are no two image data that are captured at the same time and by the same image capturing unit 103, in other words, if there is only one image data that is captured at the same time and by the same image capturing unit 103 (NO at Step S202), then the display unit 303 displays onto the monitor 304 the image data (Step S204).

As described above, the high-speed moving object 100 is in a status where the high-speed moving object 100 can receive radio wave of the first frequency f1 and radio wave of the second frequency f2 at any time, and when control data is received from the base station 200 over the radio wave of the first frequency f1 or the radio wave of the second frequency f2, the high-speed moving object 100 transmits the same image data over the radio wave of the first frequency f1 or the radio wave of the second frequency f2, respectively. This means that when the high-speed moving object 100 receives the control data from the base station 200 over both of the radio wave of the first frequency f1 and the radio wave of the second frequency f2, the high-speed moving object 100 transmits the same image data over both of the radio wave of the first frequency f1 and the radio wave of the second frequency f2, and the control center 300 selects, from the two image data, image data having better image quality, so that the image data can be transmitted without processing for switching the base stations 200 to communicate with the high-speed moving object 100. Thereby a high-speed handover at data transmission from the high-speed moving object can be realized and the data transmission can be performed properly.

Note that the first embodiment may have a structure in which the control center 300 includes an instruction unit which designates the image capturing unit 103 using a camera ID and instructs the high-speed moving object 100 to capture image by the image capturing unit 103, adds the instructions including the camera ID to the control data which is to be transmitted to the base station 200, and transmits the control data to the high-speed moving object 100. In this case, the first communication unit 101 and the second communication unit 102 in the high-speed moving object 100 decide image data to be transmitted based on the camera ID added to the control data, and transmit the image data.

Note also that in the first embodiment, the selection unit 302 in the control center 300 determines whether or not image data are captured at the same time, based on the time stamps added to the image data, but the present invention is not limited to the above. For example, the selection unit 302 may determine whether or not image data are captured at the same time, based on each sequence number which has been added to each image data by the image capturing units 103. In this case, it is possible to easily perform the determination as to whether or not the image data are captured at the same time. As the sequence number, for example, a value that has a width 16 bits and is increased by 1 sequentially per data packet from a random initial value can be used.

### (Second Embodiment)

The second embodiment describes a case where, in the radio transmission system for the high-speed moving object described in the first embodiment, both of the high-speed moving object 100 and the base station 200 have respective directional antennae.

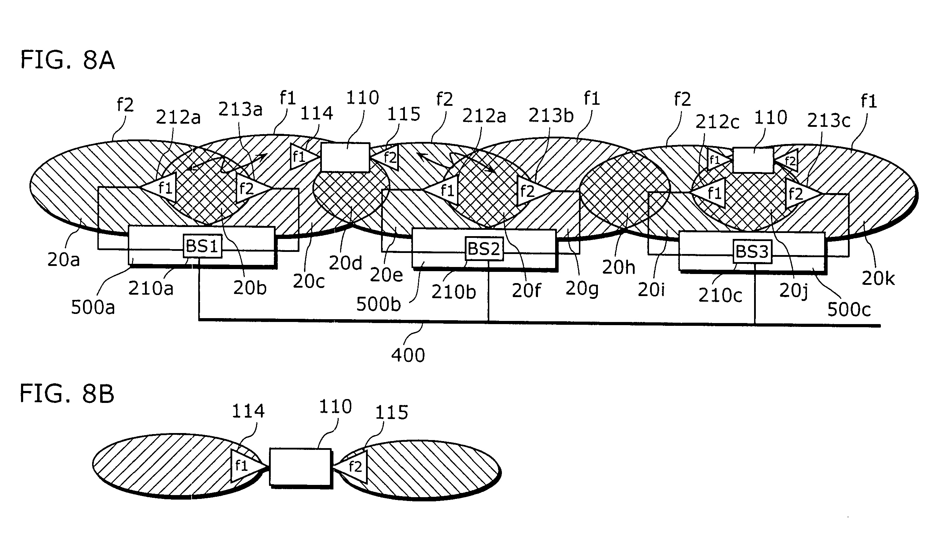

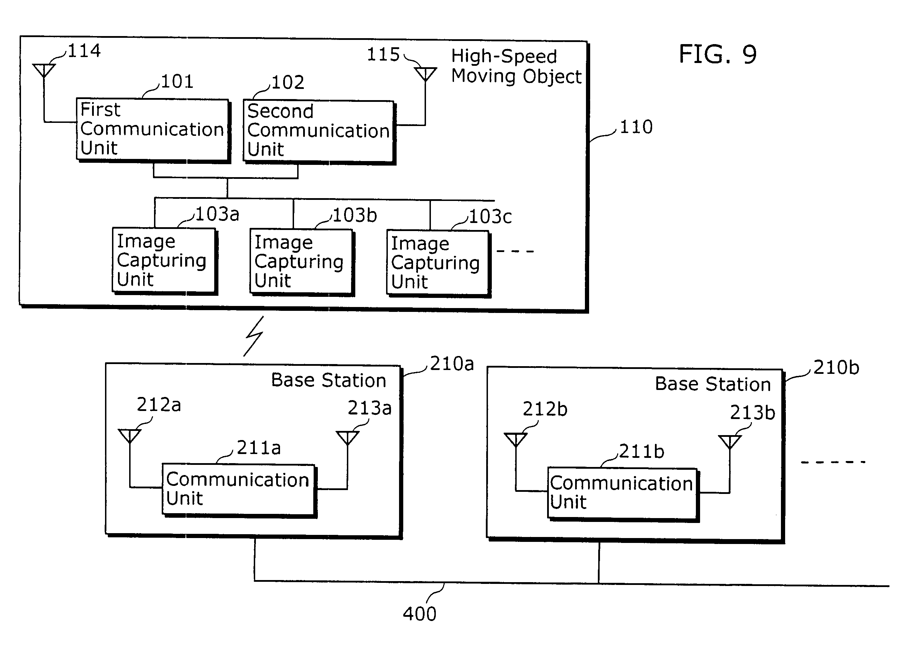

FIGS. 8A and 8B are schematic diagrams showing a system structure of a radio transmission system for a high-speed moving object according to the second embodiment, and FIG. 9 is a block diagram showing an internal structure of each element in this radio transmission system for a high-speed moving object. In this radio transmission system for a high-speed moving object, as shown in FIG. 9, a high-speed moving object 110 includes directional antennae 114 and 115 instead of the antennae 104 and 105 in the first embodiment, and a base station 210 includes a communication unit 211 and directional antennae 212 and 213 instead of the communication unit 201 and the antenna 202 in the first embodiment. Note that the same elements are designated by the same reference numerals in the first embodiment and the details of those elements are not described again below. Note also that the control center 300 is not shown in FIGS. 8A, 8B, nor 9.

The directional antennae 114 and 115 in the high-speed moving object 110 are antennae for transmitting and receiving radio waves in a particular direction, and as shown in FIG. 8B, the directional antenna 114 is installed at an end part in a moving direction of the high-speed moving object 110, facing the outside (for example, facing forward if the directional antennae 114 is installed to a running direction, while facing backward if the directional antennae 114 is installed to an opposite direction of the running) and the directional antenna 115 is installed at the other end part in the moving direction of the high-speed moving object 110 and at an opposite side of the directional antenna 114, facing the outside (facing an opposite side of the directional antenna 114).

When the first communication unit 101 receives control data from the base station 210 via the directional antenna 114 over radio wave of the first frequency f1, the first communication unit 101 transmits image data captured by the image capturing unit 103 over radio wave of the first frequency f1. When the second communication unit 102 receives control data from the base station 210 via the directional antenna 115 over radio wave of the second frequency f2, the second communication unit 102 transmits image data captured by the image capturing unit 103 over radio wave of the second frequency f2.

The directional antennae 212 and 213 in the base station 210 are antennae for transmitting and receiving radio waves in a particular direction, and the directional antenna 212 is installed at an end part in a longitudinal direction of a station platform 500 where the base station 210 is equipped, facing the directional antenna 114 of the high-speed moving object 110, as shown in FIG. 8A. On the other hand, the directional antenna 213 is installed at the other end part in the longitudinal direction of the station platform 500 and at an opposite side of the directional antenna 212, facing the directional antenna 115 of the high-speed moving object 110.

The communication unit 211 transmits control data indicating a timing of transmission at predetermined time intervals via the directional antenna 212 over radio wave of the first frequency f1 and via the directional antenna 213 over radio wave of the second frequency f2. In addition, the communication unit 211 receives, via the directional antenna 212, image data transmitted from the high-speed moving object 100 over radio wave of the first frequency f1, and receives, via the directional antenna 213, image data transmitted from the high-speed moving object 100 over radio wave of the second frequency f2, and then transmits respective image data to the control center 300 via the network 400.

Therefore, each of the base stations 210a, 210b, 210c, ... performs communication over radio wave of the first frequency f1 and radio wave of the second frequency f2.

In the radio transmission system for the high-speed moving object having the above-described structure, an area where the radio wave of the first frequency f1 can be transmitted and received and an area where the radio wave of the second frequency f2 can be transmitted and received are partly overlapped with each other, around at a middle point between the railroad or subway station equipped with the base station 210 and another railroad or subway station adjacent to the railroad or subway station, as shown in FIG. 8A. Therefore, the high-speed moving object 110 performs, depending on a position of the high-speed moving object 110, one of: transmitting and receiving over only radio wave of the first frequency f1; transmitting and receiving over only radio wave of the second frequency f2; and transmitting and receiving over both of radio wave of the first frequency f1 and radio wave of the second frequency f2. For example, in areas 20a, 20e, and 20i shown in FIG. 8A, the high-speed moving object 110 performs transmitting and receiving over only radio wave of the second frequency f2. In areas 20c, 20g, and 20k, the high-speed moving object 110 performs transmitting and receiving over only radio wave of the first frequency f1. In areas 20b, 20d, 20f, 20h, and 20j, the high-speed moving object 110 performs transmitting and receiving over both of radio wave of the first frequency f1 and radio wave of the second frequency f2.

As described above, both of the high-speed moving object 110 and the base station 210 include respective directional antennae, and each of the base stations 210a, 210b, 210c, ... performs communication over both of radio wave of the first frequency f1 and radio wave of the second frequency f2, so that a reachable distance of the radio wave becomes longer in comparison with a reachable distance by a non-directional antenna, thereby reducing the number of antennae to be installed, which makes it possible to perform communication by installing base stations only at railroad or subway stations. Moreover, the reduction of the number of antennae can restrain influence from others.

Furthermore, when control data is received from the base station 210 over both of radio wave of the first frequency f1 and radio wave of the second frequency f2, the high-speed moving object 110 transmits the same image data over both of radio wave of the first frequency f1 and radio wave of the second frequency f2, and the control center selects, from the two image data, image data having better image quality, so that the image data can be transmitted without processing for switching the base stations 200 to communicate with the high-speed moving object 100, in the same manner as described in the first embodiment. Thereby high-speed handover at data transmission from the high-speed moving object can be realized and the data transmission can be properly performed.

### (Third Embodiment)

The third embodiment describes a case where, in the radio transmission system for the high-speed moving object described in the second embodiment, the base station 210 further has additional directional antennae.

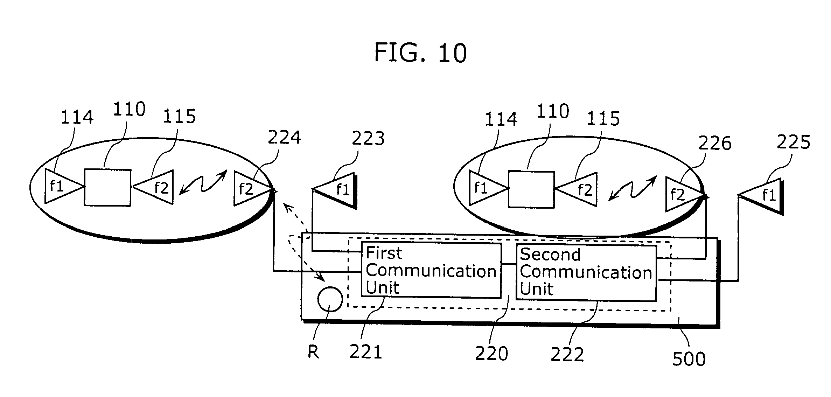

FIG. 10 is a schematic diagram showing a system structure of a radio transmission system for a high-speed moving object according to the third embodiment. In this radio transmission system for a high-speed moving object, as shown in FIG. 10, a base station 220 includes a first communication unit 221, a second communication unit 222, and directional antennae 223 to 226, instead of the communication unit 211 and the antennae 212 and 213 in the second embodiment. Note that the same elements are designated by the same reference numerals in the second embodiment and the details of those elements are not described again below.

The directional antennae 223 to 226 in the base station 220 are antennae for transmitting and receiving radio waves in a particular direction, and the directional antenna 223 is installed, in the same manner of the directional antenna 212, at an end part in a longitudinal direction of the station platform 500 where the base station 220 is equipped, facing the directional antenna 114 in the high-speed moving object 110, as shown in FIG. 10. On the other hand, the directional antenna 224 is installed, as shown in FIG. 10, at back on to the directional antenna 223, facing an opposite side of the directional antenna 223 (facing the directional antenna 115 of the high-speed moving object 110).

Further, the directional antenna 226 is installed at the other end part in the longitudinal direction of the station platform 500 and at an opposite side of the directional antenna 223, facing the directional antenna 115 of the high-speed moving object 110. Still further, the directional antenna 225 is installed, as shown in FIG. 10, at back on to the directional antenna 226, facing an opposite side of the directional antenna 226 (facing the directional antenna 114 of the high-speed moving object 110).

The first communication unit 221 transmits control data indicating a timing of transmission at predetermined time intervals via the directional antenna 223 over radio wave of the first frequency f1 and via the directional antenna 224 over radio wave of the second frequency f2. In addition, the first communication unit 221 receives, via the directional antenna 223, image data transmitted from the high-speed moving object 110 over radio wave of the first frequency f1, and receives, via the directional antenna 224, image data transmitted from the high-speed moving object 110 over radio wave of the second frequency f2, and then transmits respective image data to the control center 300 via the network 400.

On the other hand, the second communication unit 222 transmits control data indicating a timing of transmission at predetermined time intervals via the directional antenna 225 over radio wave of the first frequency f1 and via the directional antenna 226 over radio wave of the second frequency f2. In addition, the second communication unit 222 receives, via the directional antenna 225, image data transmitted from the high-speed moving object 110 over radio wave of the first frequency f1, and receives, via the directional antenna 226, image data transmitted from the high-speed moving object 110 over radio wave of the second frequency f2, and then transmits respective image data to the control center 300 via the network 400.

Moreover, the first communication unit 221 and the second communication unit 222 are in synchronization with each other to output alternately control data to be transmitted over radio wave of the first frequency f1. In the same manner, the first communication unit 221 and the second communication unit 222 are in synchronization with each other to output alternately control data to be transmitted over radio wave of the second frequency f2.

In the radio transmission system for the high-speed moving object having the above-described structure, regarding radio wave of the first frequency f1, when the high-speed moving object is at the railroad or subway station, communication is performed via the directional antenna 223, and when the high-speed moving object is out of the railroad or subway station, communication is performed via the directional antenna 225, as shown in FIG. 10. On the other hand, regarding radio wave of the second frequency f2, when the high-speed moving object is at the railroad or subway station, communication is performed via the directional antenna 226, and when the high-speed moving object is out of the railroad or subway station, communication is performed via the directional antenna 224.

As described above, the base station 220 includes two directional antennae corresponding to radio wave of the first frequency f1 and two directional antennae corresponding to radio wave of the second frequency f2, so that it is possible to prevent a situation where the base station 220 cannot communicate with the running high-speed moving object because another high-speed moving object at the railroad or subway station becomes an obstacle for the communication, for example. Furthermore, even if, for example, there is a radio wave interference source R at the station platform 500 as shown in FIG. 10, the directional antenna 224 has directivity by which the directional antenna 224 is not affected by the radio wave interference source R, so that it is possible to perform reliable communication between the high-speed moving object 110 and the base station 220.

### (Fourth Embodiment)

The fourth embodiment describes a case where, in the radio transmission system for the high-speed moving object described in the second embodiment, the high-speed moving object 110 further has additional directional antennae and uses radio waves of four kinds of frequencies.

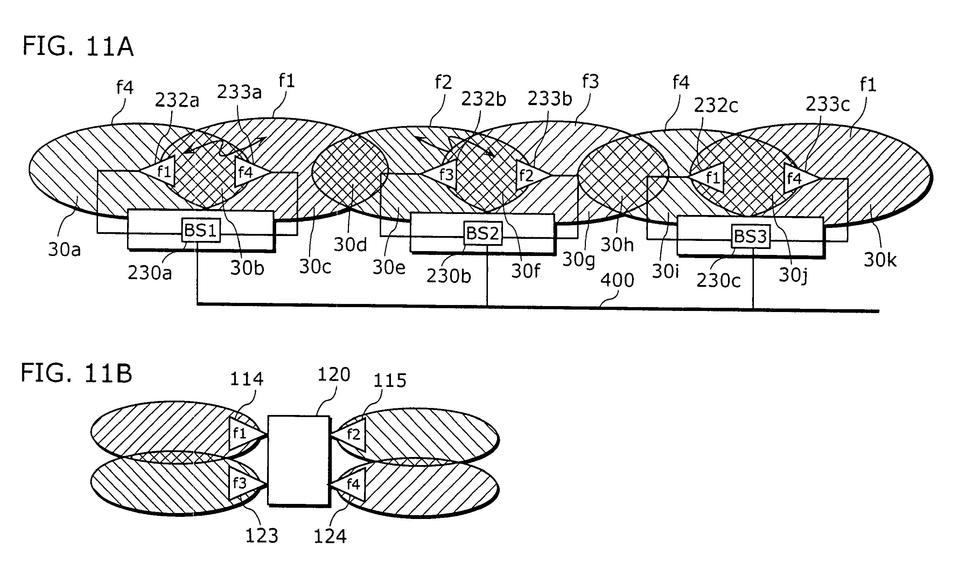

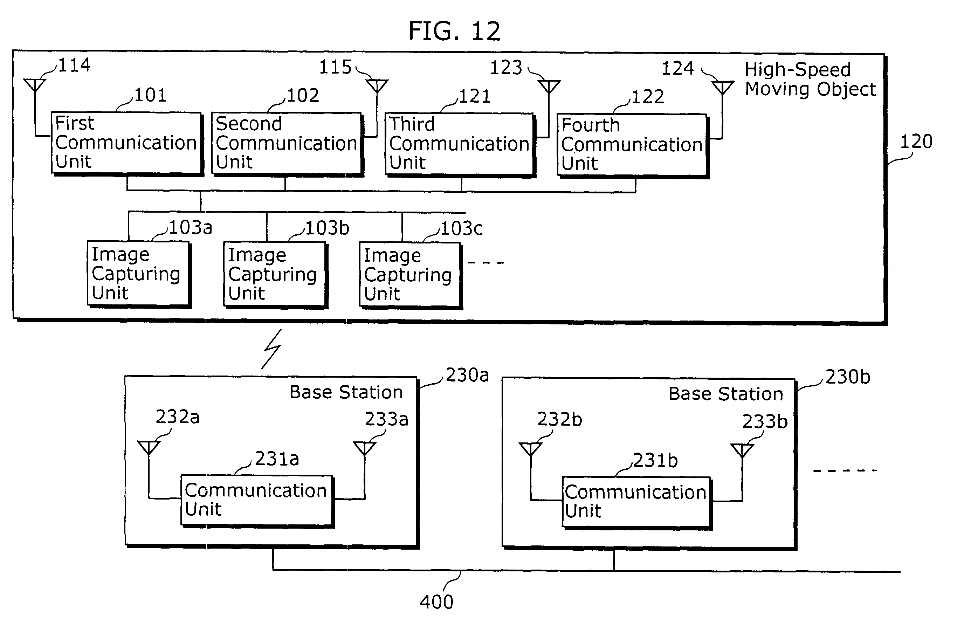

FIGS. 11A and 11B are schematic diagrams showing a system structure of the radio transmission system for the high-speed moving object according to the fourth embodiment of the present invention, and FIG. 12 is a block diagram showing an internal structure of each element of this radio transmission system for the high-speed moving object. In this radio transmission system for the high-speed moving object, as shown in FIG. 12, a high-speed moving object 120 includes a third communication unit 121, a fourth communication unit 122, and directional antennae 123 and 124, in addition to the structure of the second embodiment. Note that the same elements are designated by the same reference numerals in the second embodiment and the details of those elements are not described again below.

The directional antennae 123 and 124 in the high-speed moving object 120 are antennae for transmitting and receiving radio waves in each particular direction in the same manner as the directional antennae 114 and 115, and as shown in FIG. 11B, the directional antenna 123 is installed next to the directional antenna 114 at an end part in a moving direction of the high-speed moving object 120, facing the outside. On the other hand, the directional antenna 124 is installed next to the directional antenna 115 at the other end part in the moving direction of the high-speed moving object 120 and at an opposite side of the directional antenna 123, facing the outside.

When the third communication unit 121 in the high-speed moving object 120 receives control data from the base station 230 via the directional antenna 123 over radio wave of the third frequency f3, the third communication unit 121 transmits image data captured by the image capturing unit 103 over radio wave of the third frequency f3. When the fourth communication unit 122 receives control data from the base station 230 via the directional antenna 124 over radio wave of the fourth frequency f4, the fourth communication unit 122 transmits image data captured by the image capturing unit 103 over radio wave of the fourth frequency f4.

As shown in FIG. 11A, each of the base stations 230a, 230c, ... performs communication via the directional antennae 232a, 232c, ... over radio wave of the first frequency f1 and via the directional antennae 233a, 233c, ... over radio wave of the fourth frequency f4. Further, each of the base stations 230b, 230d, ... performs communication via the directional antennae 232b, 232d, ... over radio wave of the third frequency f3 and via the directional antennae 233b, 233d, ... over radio wave of the second frequency f2.

In the radio transmission system for the high-speed moving object having the above-described structure, areas where the radio waves of the frequencies f1 to f4 can be transmitted and received are partly overlapped with one another, at the railroad or subway station equipped with the base station 230 and around at a middle point between the railroad or subway stations adjacent to each other, as shown in FIG. 11A. Therefore, the high-speed moving object 120 performs, depending on a position of the high-speed moving object 110, one of: transmitting and receiving over only radio wave of the first frequency f1; transmitting and receiving over only radio wave of the second frequency f2; transmitting and receiving over only radio wave of the third frequency f3; transmitting and receiving over only radio wave of the fourth frequency f4; transmitting and receiving over both of radio wave of the first frequency f1 and radio wave of the second frequency f2; transmitting and receiving over both of radio wave of the second frequency f2 and radio wave of the third frequency f3; transmitting and receiving over both of radio wave of the third frequency f3 and radio wave of the fourth frequency f4; and transmitting and receiving over both of radio wave of the first frequency f1 and radio wave of the fourth frequency f4.

For example, in areas 30a and 30i shown in FIG. 11A, the high-speed moving object 120 performs transmitting and receiving over only radio wave of the fourth frequency f4. In areas 30c and 30k, the high-speed moving object 120 performs transmitting and receiving over only radio wave of the first frequency f1. In an area 30e, the high-speed moving object 120 performs transmitting and receiving over only radio wave of the second frequency f2 and in an area 30g, the high-speed moving object 120 performs transmitting and receiving over only radio wave of the third frequency f3. In areas 30b and 30j, the high-speed moving object 120 performs transmitting and receiving over both of radio wave of the first frequency f1 and radio wave of the fourth frequency f4. In an area 30d, the high-speed moving object 120 performs transmitting and receiving over both of radio wave of the first frequency f1 and radio wave of the second frequency f2, in a 30f, the high-speed moving object 120 performs transmitting and receiving over both of radio wave of the second frequency f2 and radio wave of the third frequency f3, and in 30h, the high-speed moving object 120 performs transmitting and receiving over both of radio wave of the third frequency f3 and radio wave of the fourth frequency f4.

As described above, the radio waves of the four kinds of frequencies are utilized so that the base stations 230 adjacent to each other use frequencies different from each other, which makes it possible, as in a case where, for example, each of the adjacent base stations 230 uses the same two kinds of frequencies, to prevent that radio wave reaches too far due to an installation situation thereby disturbing radio wave of an adjacent base station.

Note that in the fourth embodiment, the high-speed moving object 120 has a structure having the directional antennae 123 and the third communication unit 121 corresponding to radio wave of the third frequency f3, and the directional antenna 124 and the fourth communication unit 122 corresponding to radio wave of the frequency f4, but the present invention is not limited to the above. For example, the first communication unit 101 may have a structure, in which, when control data is received from the base station 210 via the directional antenna 114 over radio wave of the first frequency f1 or radio wave of the third frequency f3, the frequencies are switched depending on a reception status of radio waves and image data captured by the image capturing unit 103 is transmitted over radio wave of the first frequency f1 or radio wave of the third frequency f3, respectively. Furthermore, the second communication unit 102 may have a structure, in which, when control data is received from the base station 210 via the directional antenna 115 over radio wave of the second frequency f2 or radio wave of the fourth frequency f4, the frequencies are switched depending on a reception status of radio waves and image data captured by the image capturing unit 103 is transmitted over radio wave of the second frequency f2 or radio wave of the fourth frequency f4, respectively.

In this case, as shown in FIG. 11A for example, when the high-speed moving object 120 moves from an area 30d where radio wave of the first frequency f1 can be received to an area 30e where radio wave of the first frequency f1 cannot be received, the first communication unit 101 can switch, via the directional antenna 114, the frequencies to be received from radio wave of the first frequency f1 to the radio wave of the third frequency f3. At this moment, the communication between the high-speed moving object 120 and the base station 230 is being performed over radio wave of the second frequency f2 and is not affected by the frequency switching from the radio wave of the first frequency f1 to the radio wave of the third frequency f3.

### (Fifth Embodiment)

The fifth embodiment describes a case where, in the radio transmission system for the high-speed moving object described in the fourth embodiment, the structure of the high-speed moving object 120 is considered as one Unit and a plurality of such a Unit are connected to one another.

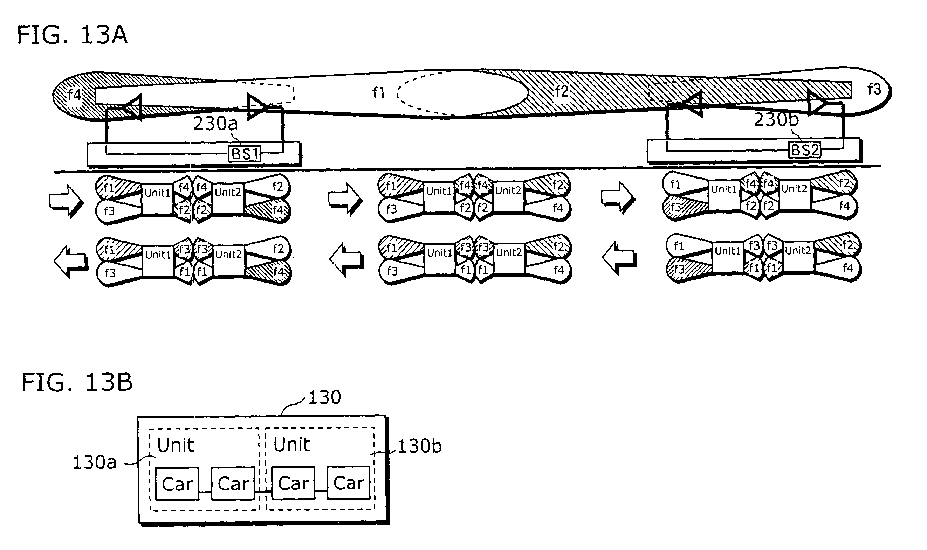

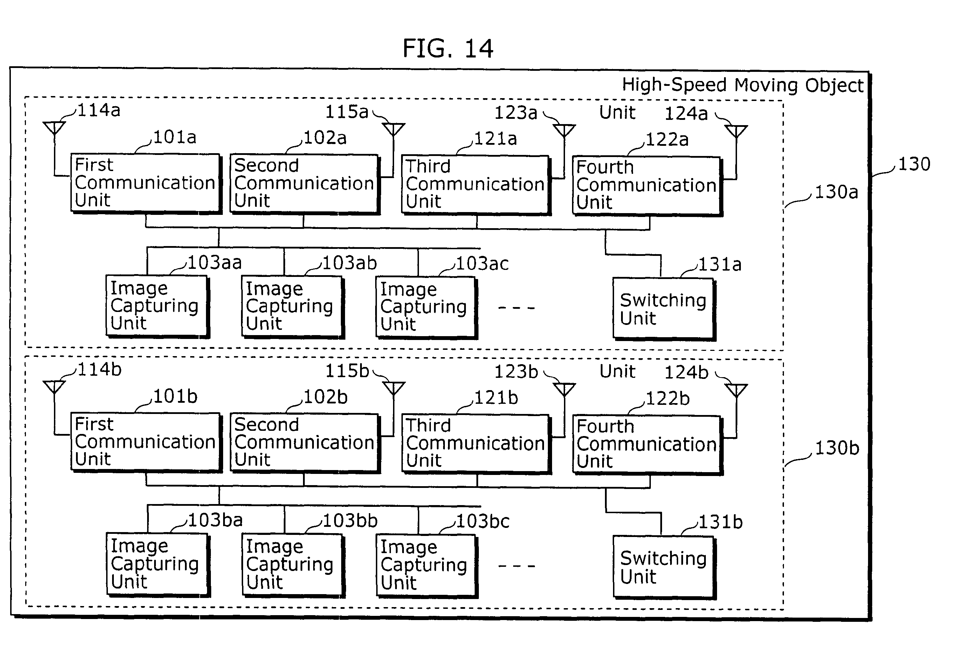

FIGS. 13A and 13B are schematic diagrams showing a system structure of a radio transmission system for a high-speed moving object according to the fifth embodiment of the present invention, and FIG. 14 is a block diagram showing an internal structure of the high-speed moving object in this radio transmission system. In this radio transmission system for the high-speed moving object, the structure of the high-speed moving object 120 in the fourth embodiment is considered as one Unit and two of such a Unit are connected to each other. For example, as shown in FIG. 13B, if one Unit includes two cars and two of such a Unit are connected to each other, the high-speed moving object 130 eventually has four cars. Note that the same elements are designated by the same reference numerals in the fourth embodiment and the details of those elements are not described again below.

In the same manner as the high-speed moving object 120 of the fourth embodiment, a Unit 130a in the high-speed moving object 130 has, as shown in FIG. 14, a first communication unit 101a, a second communication unit 102a, a third communication unit 121a, a fourth communication unit 122a, directional antennae 114a, 115a, 123a, and 124a, and a switching unit 131a. In the same manner, a Unit 130b has a first communication unit 101b, a second communication unit 102b, a third communication unit 121b, a fourth communication unit 122b, directional antennae 114b, 115b, 123b, and 124b, and a switching unit 131b.

Here, the directional antennae 114a and 123a in the Unit 130a and the directional antennae 115b and 124b in the Unit 130b, which are installed at both end parts of a whole structure in which two Units are connected, are used for the communication between the high-speed moving object 130 and the base station 230 and operate in the same manner as described in the fourth embodiment.

On the other hand, the directional antennae 115a and 124a in the Unit 130a and the directional antennae 114b and 123b in the Unit 130b, which are installed at other end parts where the Unit 130a and the Unit 130b are connected to each other, are used for communication between the Units 130a and 130b. Here, it is assumed in the fifth embodiment that, as frequency of radio wave to be used for the communication between the Units, the second frequency f2 and the fourth frequency f4 have been previously assigned to be used for an inbound line (right direction in FIG. 13A) and the first frequency f1 and the third frequency f3 are assigned to be used for an outbound line (left direction in FIG. 13A).

In this case, in the Unit 130a of the high-speed moving object 130 (inbound line), in the same manner as described in the fourth embodiment, the second communication unit 102a transmits radio wave of the second frequency f2 using the directional antenna 115a, and the fourth communication unit 122a transmits radio wave of the fourth frequency f4 using the directional antenna 124a. On the other hand, in the Unit 130b, the first communication unit 101b transmits radio wave of the second frequency f2 using the directional antenna 114b, and the third communication unit 121b transmits radio wave of the fourth frequency f4 using the directional antenna 123b. Note that the second communication unit 102a or the fourth communication unit 122a in the Unit 130a and the first communication unit 101b or the third communication unit 121b in the Unit 130b, which perform the communication between the Units, attenuate transmission output to transmit the radio waves.

The switching units 131a and 131b select, based on a frequency of the radio wave used for the communication with the base station, a frequency from the second frequency f2 and the fourth frequency f4 which have been assigned as the frequencies of the radio wave to be used for the communication between the Units. Furthermore, the switching unit 131a selects one of the second communication unit 102a and the fourth communication unit 122a corresponding to the selected frequency, and instructs the selected communication unit to perform communication between the Units. On the other hand, the switching unit 131b selects one of the first communication unit 101b and the third communication unit 121b corresponding to the selected frequency, and instructs the selected communication unit to perform communication between the Units.

Still further, the switching units 131a and 131b further select, depending on a change of the frequency used for the communication with the base station, frequency of radio wave to be used for the communication between the Units, and instructs a communication unit corresponding to the selected frequency to perform communication between the Units.

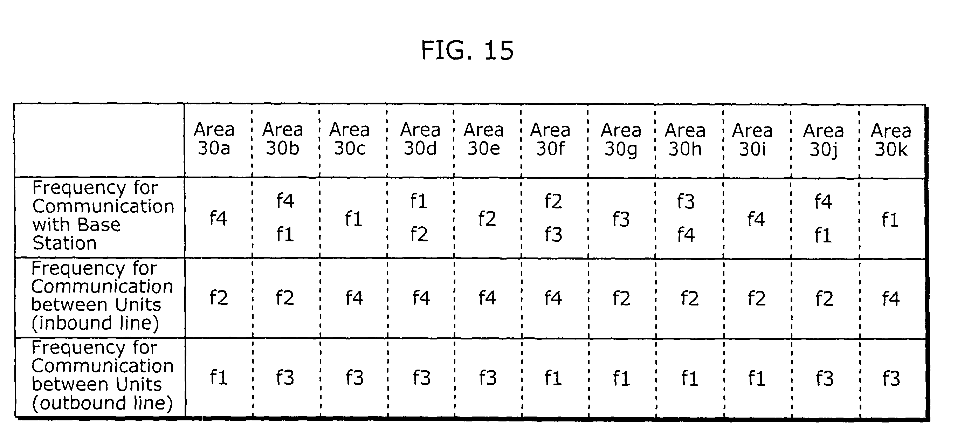

FIG. 15 is an explanatory diagram showing a corresponding relationship among a position of the high-speed moving object 130 (a position in FIG. 11A), a frequency of radio wave used in the communication between the high-speed moving object 130 and the base station 230, and frequencies of radio waves used for the communication between the Units (on an inbound line and an outbound line). In the case for the inbound line, when the high-speed moving object 130 moved from the area 30b to the area 30c as shown in FIG. 15, the high-speed moving object 130 changes a frequency of the radio wave used for the communication between the Units from the second frequency f2 to the fourth frequency f4. In addition, when the high-speed moving object 130 moved from the area 30f to the area 30g, the high-speed moving object 130 changes the frequency of the radio wave used for the communication between the Units from the fourth frequency f4 to the second frequency f2.

On the other hand, in the case for the outbound line, when the high-speed moving object 130 moved from the area 30j to the area 30h as shown in FIG. 15, the high-speed moving object 130 changes a frequency of the radio wave used for the communication between the Units from the third frequency f3 to the first frequency f1. In addition, when the high-speed moving object 130 moved from the area 30f to the area 30e, the high-speed moving object 130 changes the frequency of the radio wave used for the communication between the Units from the first frequency f1 to the third frequency f3.

As described above, when the high-speed moving object 130 has a plurality of the Units, a frequency of radio wave and a communication unit, which are not used for the communication between the high-speed moving object 130 and the base station 230, are used for the communication between the Units, so that transmission between the units can be performed without installing an additional transmission device such as a cable. Furthermore, in the inbound line and the outbound line, a frequency of radio wave usable for the communication between the Units has been previously designated, so that, even if the high-speed moving objects 130 stop side by side on the inbound line and the outbound line for example, it is possible to prevent the frequencies of radio waves used for the respective communication between the Units from being overlapped with each other.

### (Sixth Embodiment)

In the meantime, a reception status of the base station regarding radio wave transmitted from the high-speed moving object varies depending on conditions of a distance from the high-speed moving object, and for a subway, of existence of a curve in a subway and of a tunnel structure such as a wall surface structure, and the like. For example, when the high-speed moving object uses too strong radio waves for the base station, this causes a possibility of disturbing a base station next to the base station. On the other hand, for example, when the base station cannot receive radio waves from the high-speed moving object, communication is impaired.

Therefore, the sixth embodiment describes a case where, in the radio transmission system for the high-speed moving object described in the second embodiment, characteristics of radio wave transmitted from the high-speed moving object are changed depending on positions of the high-speed moving object.

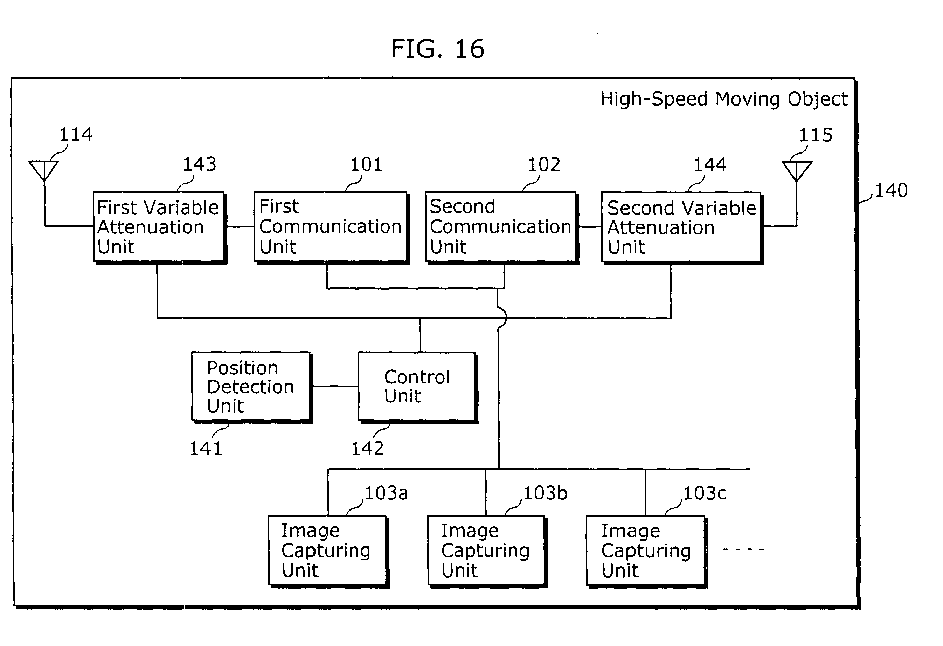

FIG. 16 is a block diagram showing an internal structure of a high-speed moving object in a radio transmission system for the high-speed moving object according to the sixth embodiment of the present invention. In this radio transmission system for the high-speed moving object, the high-speed moving object 140 has, as shown in FIG. 16, a position detection unit 141, a control unit 142, a first variable attenuation unit 143, and a second variable attenuation unit 144, in addition to the structure of the second embodiments. Note that the same elements are designated by the same reference numerals in the second embodiment and the details of those elements are not described again below. Note also that a structure of the system and structures of a base station and a control center in the sixth embodiment are the same as described in the second embodiment.

The position detection unit 141 detects a position at which the high-speed moving object 140 is currently running. A method of detecting this running position may include, for example, counting a distance using the number of rotations of a wheel (the counting is re-set at a railroad or subway station), and calculating a distance by integrating a speed. Note that the method of detecting this running position is not limited to these methods but may be other methods except these methods.

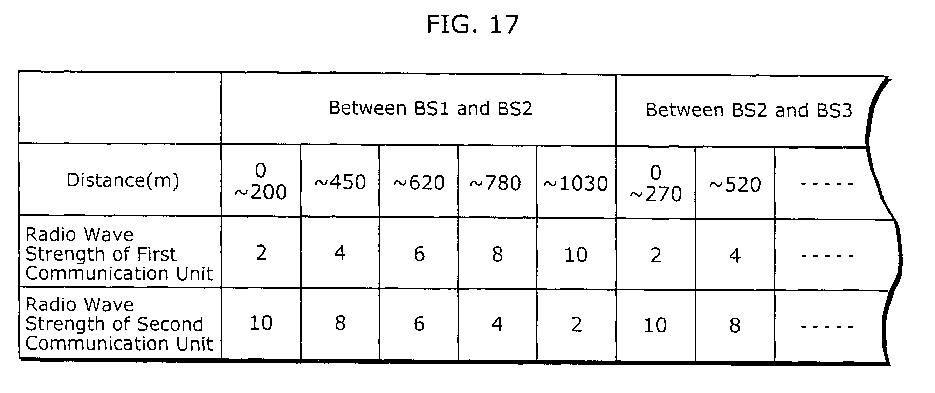

The control unit 142 has a characteristic table indicating a radio wave strength at a running position as shown in FIG. 17 for example, and the control unit 142 determines, based on a distance from a railroad or subway station (base station) detected by the position detection unit 141, each output strength of radio wave of the first frequency f1 to be transmitted by the first communication unit 101 and radio wave of the second frequency f2 to be transmitted by the second communication unit 102. In addition, the control unit 142 instructs the first variable attenuation unit 143 and the second variable attenuation unit 144 to adjust each output strength to have the determined output strength. Note that the characteristic table has previously been set depending on conditions, in a case of a subway for example, of a curve in a subway, a tunnel structure such as a wall surface structure, and the like. Note also that the characteristic table shown in FIG. 17 indicates the output strength of radio waves, using ten stages 1 to 10, but the present invention is not limited to the above.

The first variable attenuation unit 143 adjusts output strength of radio wave of the first frequency f1 to be transmitted by the first communication unit 101, according to the instructions from the control unit 142. The second variable attenuation unit 144 adjusts output strength of radio wave of the second frequency f2 to be transmitted by the second communication unit 102, according to the instructions from the control unit 142.

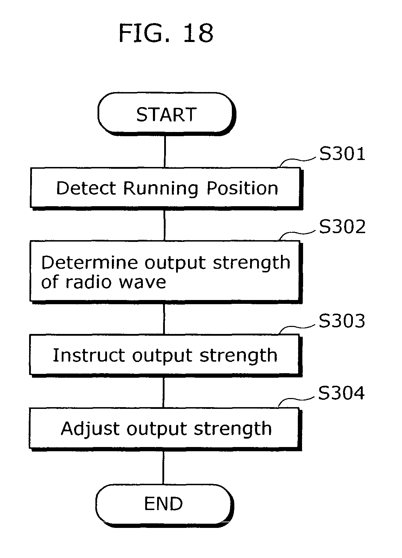

Next, an operation performed when the high-speed moving object 140 having the above-described structure determines the output strength of radio wave. FIG. 18 is a flowchart showing an operation when the high-speed moving object 140 determines the output strength of radio wave.

The position detection unit 141 detects a position at which the high-speed moving object 140 is currently running every predetermined time period and notifies the control unit 142 of the detected position (Step S301). The control unit 142 refers to the characteristic table and, using a distance from a railroad or subway station (base station) notified from the position detection unit 141, determines each output strength of radio wave of the first frequency f1 to be transmitted by the first communication unit 101 and radio wave of the second frequency f2 to be transmitted by the second communication unit 102 (Step S302). For example, if a distance from the railroad or subway station notified from the position detection unit 141 is 250 m, then the output strength of radio wave of the first frequency f1 to be transmitted by the first communication unit 101 is determined as "4", and the output strength of radio wave of the second frequency f2 to be transmitted by the second communication unit 102 is determined as "8". Then, the control unit 142 instructs the first variable attenuation unit 143 and the second variable attenuation unit 144 to adjust each output strength to have the determined output strength (Step S303).

The first variable attenuation unit 143 adjusts, to the output strength determined by the control unit 142, output strength of radio wave of the first frequency f1 to be transmitted by the first communication unit 101. In the same manner, the second variable attenuation unit 144 adjusts, to the output strength determined by the control unit 142, output strength of radio wave of the second frequency f2 to be transmitted by the second communication unit 102 (Step S304).

As described above, the output strength of radio wave transmitted from the high-speed moving object 140 is changed depending on a running position, so that a communication status of the base station can be maintained most suitably. Further, this prevents that radio waves from the high-speed moving object 140 reach too far thereby disturbing other base stations.

Note that, in the sixth embodiment, the output strength of radio wave transmitted from the high-speed moving object 140 is changed depending on a running position, but the present invention is not limited to the above. For example, it is possible to change redundancy of error-correction data transmitted from the high-speed moving object 140, depending on the running position.

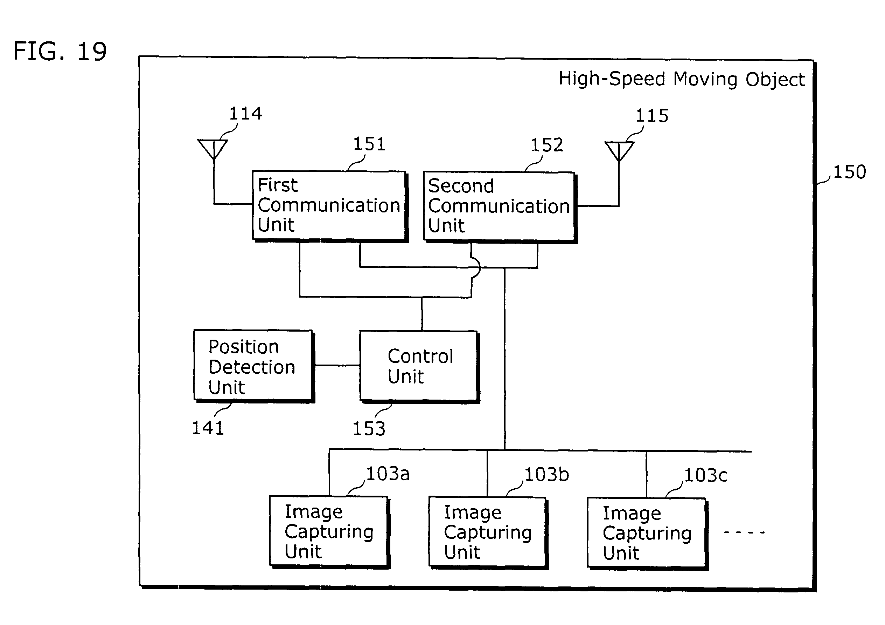

FIG. 19 is a block diagram showing an internal structure of the high-speed moving object in this case. This high-speed moving object 150 has, as shown in FIG. 19, a position detection unit 141 and a control unit 153 in addition to the structure of the second embodiment. Note that the same elements are designated by the same reference numerals and the details of those elements are not described again below.

The control unit 153 has a characteristic table indicating redundancy of error-correction data at a running position, and determines, based on a distance from the railroad or subway station (base station) detected by the position detection unit 141, each redundancy of error-correction data that is to be added to data to be transmitted by the first communication unit 101 and data to be transmitted by the second communication unit 102. In addition, the control unit 153 instructs the first communication unit 151 and the second communication unit 152 to add error-correction data having the determined redundancy.

The first communication unit 151 and the second communication unit 152 add respective error-correction data having the redundancy instructed by the control unit 153 to generate respective data to be transmitted.

As described above, the redundancy of error-correction data to be transmitted from the high-speed moving object 140 is changed depending on a running position, so that, for example, at a location of week radio wave, it is possible to strengthen the error correction by increasing the redundancy of error-correction data, which makes it possible to properly transmit data to the base station.

Note that, in the sixth embodiment, the characteristics such as the output strength of radio wave and the redundancy of error-correction data to be transmitted from the high-speed moving object 140 are changed depending on running positions, but the present invention is not limited to the above. For example, in the high-speed moving object 140, strength of radio wave received from the base station is measured every predetermined time period, and depending on the strength of radio wave, the characteristics such as the output strength of radio wave and the redundancy of error-correction data to be transmitted from the high-speed moving object 140 may be changed.

### (Seventh Embodiment)

In the meantime, the base station always transmits radio waves even if the high-speed moving object does not exist in an area corresponding to the base station. In this case, there is a possibility of disturbing other wireless communication devices using the same frequency, thereby reducing use efficiency of the radio waves.

Therefore, the seventh embodiment describes a case where, in the radio transmission system for the high-speed moving object described in the second embodiment, output of radio wave transmitted from the base station is performed depending on a position of the high-speed moving object.

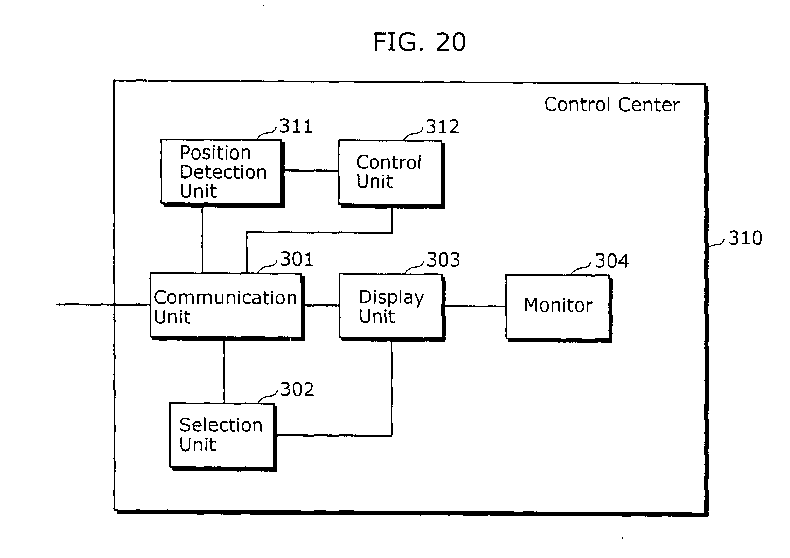

FIG. 20 is a block diagram showing an internal structure of a control center in a radio transmission system for a high-speed moving object according to the seventh embodiment of the present invention. In this radio transmission system for the high-speed moving object, the control center 310 has, as shown in FIG. 20, a position detection unit 311 and a control unit 312 in addition to the structure of first embodiment. Note that the same elements are designated by the same reference numerals in the first embodiment and the details of those elements are not described again below. Note also that a structure of the system and structures of a high-speed moving object and a base station in the seventh embodiment are the same as described in the second embodiment.

The position detection unit 311 detects respective positions at which a plurality of the high-speed moving objects 110 are currently running. A method of detecting the running positions may include, for example, detecting running distances of the high-speed moving objects 110 using radio communication status between the high-speed moving objects 110 and the base stations 210, and detecting running distances of the high-speed moving objects 110 using a train driving system such as an automatic train operating device (ATO device). Note that the method of detecting the running positions is not limited to these methods, but may be other methods except these methods.

The control unit 312 manages an area corresponding to each base station 210, and determines, based on each running position of the plurality of high-speed moving objects 110 detected by the position detection unit 311, whether or not the control unit 312 makes the communication unit 211 of each base station 210 transmit control data over radio wave of the first frequency f1 and radio wave of the second frequency f2. In other words, the control unit 312 determines that radio wave of a frequency corresponding to the base station 210 corresponding to an area where the high-speed moving object 110 exists is to be outputted, and radio wave of a frequency corresponding to the base station 210 corresponding to an area where the high-speed moving object 110 does not exist is not to be outputted.

In addition, the control unit 312 instructs a base station 210, which has been determined to transmit control data, to transmit control data, and instructs a base station 210, which has been determined not to transmit control data, not to transmit control data.

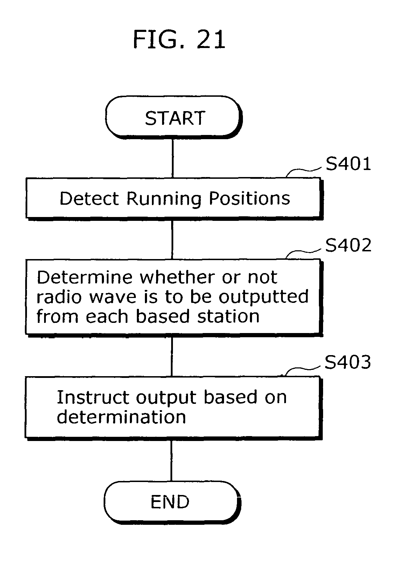

Next, an operation performed when the control center 310 having the above-described structure determines a base station 210 to transmit control data is described. FIG. 21 is a flowchart showing an operation when the control center 310 determines a base station for transmitting control data.

The position detection unit 311 detects respective positions at which a plurality of the high-speed moving objects 110 are currently running, and notifies the control unit 312 of the positions (Step S401). Next, the control unit 312 determines, bases on each running position of the plurality of high-speed moving objects 110 detected by the position detection unit 311, whether or not the control unit 312 makes the communication unit 211 of each base station 210 transmit control data over radio wave of the first frequency f1 and radio wave of the second frequency f2 (Step S402). For example, in a case where the high-speed moving object 110 exists at a position shown in FIG. 8A, a determination is made that the base station (BS1) 210a should transmit control data over only radio wave of the first frequency f1, the base station (BS2) 210b should transmit control data over only radio wave of the second frequency f2, and the base station (BS3) 210c should transmit control data over radio wave of the first frequency f1 and radio wave of the second frequency f2. In this case, the base station (BS1) 210a does not output over radio wave of the second frequency f2, and the base station (BS2) 210b does not output over radio wave of the first frequency f1.

Note that, for example, in a case where the high-speed moving object 110 shown above the base station (BS3) 210c in FIG. 8A does not exist, the base station (BS3) 210c is determined not to transmit control data over radio wave of the first frequency f1 nor radio wave of the second frequency f2, so that the base station (BS3) 210c does not output over radio wave of the first frequency f1 nor radio wave of the second frequency f2.

Then, the control unit 312 instructs each base station 210 to output, based on the detail determined as above (Step S303).

The communication unit 211 of each base station 210 which has received the output instruction eventually transmits control data over the radio wave as instructed.

As described above, the control regarding whether or not each base station 210 transmits radio wave is performed by the control center 310 depending on a position of the high-speed moving object 110, and if the high-speed moving object does not exist in a corresponding area, the base station does not transmit radio wave, so that it is possible to improve use efficiency of the radio wave without disturbing other wireless communication devices using the same frequency.

### (Eighth Embodiment)

In the meantime, when the number of the base stations and the high-speed moving objects is increased, adjustment of parameters of each devices becomes complicated.

Thus, the eighth embodiment describes a case where, in the radio transmission system for the high-speed moving object described in the sixth embodiment, the characteristic table set for the high-speed moving object is set by the control center.

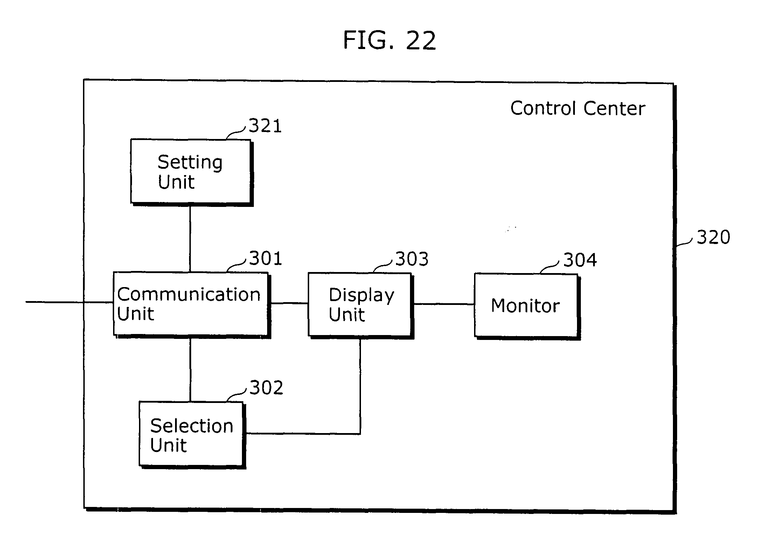

FIG. 22 is a block diagram showing an internal structure of a control center in a radio transmission system for a high-speed moving object according to the eighth embodiment of the present invention. In this radio transmission system for the high-speed moving object, the control center 320 has, as shown in FIG. 22, a setting unit 321 in addition to the structure of the first embodiment. Note that the same elements are designated by the same reference numerals in the first embodiment and the details of those elements are not described again below. Note also that a structure of the system and structures of a high-speed moving object and a base station in the eighth embodiment are the same as described in the sixth embodiment.

Based on a status of radio wave corresponding to a running position of the high-speed moving object 110, the setting unit 321 transmits the determined characteristic table to the high-speed moving object 110 and transmits a communication parameter such as output strength of radio wave of a base station to the base station in order to set the table and the parameter.

As described above, the control center 320 sets the characteristic table to the high-speed moving object 110 and sets the communication parameter to the base station, so that it is possible to easily perform initialization or system adjustment in changing the characteristic table and the communication parameter. Furthermore, as described above, the initialization and the system adjustment can be performed by remote control, so that it is not necessary to go to a location of the high-speed moving object, such as a train depot, to perform the initialization and the system adjustment.

Note that each above embodiment has described that the image data is transmitted from the high-speed moving object via the base station to the control center, but the present invention is not limited to the above. Not only the image data but also any data, such as train accident information or running position information, can be applied to the present invention. Note also that the present invention can be applied when, for example, data such as news or weather forecast can be transmit from the control center via the base station to the high-speed moving object. In this case, the high-speed moving object can select data having better communication status to be used. Note also that the control center may determine a communication status and transmit data over radio wave having better communication status.

### Industrial Applicability

As described above, the radio transmission system for the high-speed moving object according to the present invention realizes high-speed handover at data transmission, enables the data transmission to be performed properly, and is useful to transmit data from the high-speed moving object, such as a railroad train or a subway train.

## Claims

1. A radio transmission system for a high-speed moving object, in which data is transmitted between said high-speed moving object and a control center that manages a condition of said high-speed moving object, said radio transmission system comprising:
a first base station and a second base station installed alternately along a path of movement of said high-speed moving object,
said first base station having a first communication unit operable to transmit data to and receive data from said high-speed moving object over radio wave of a first frequency, to transmit data to and receive data from said control center via a network; and
said second base station having a second communication unit operable to transmit data to and receive data from said high-speed moving object over radio wave of a second frequency, to transmit data to and receive data from said control center via the network,
wherein said high-speed moving object includes:
a first communication unit operable to transmit and receive data over radio wave of the first frequency; and
a second communication unit operable to transmit and receive data over radio wave of the second frequency, and
said control center includes:
a communication unit operable to transmit the data to and receive the data from said first and second base stations via the network; and
a selection unit operable to select one data from a plurality of image data, when there are, among the received data, the plurality of image data having the same information.

2. The radio transmission system for the high-speed moving object according to Claim 1,
wherein said first communication unit of said first base station is operable to transmit control data indicating a transmission timing over radio wave of the first frequency at predetermined time intervals, and to receive data transmitted from said high-speed moving object over radio wave of the first frequency and transmit the data to said control center via the network; and
said second communication unit of said second base station is operable to transmit control data indicating a transmission timing over radio wave of the second frequency at predetermined time intervals, and to receive data transmitted from said high-speed moving object over radio wave of the second frequency and transmit the data to said control center via the network,
wherein said high-speed moving object includes
at least one image capturing unit operable to capture image of inside of a car in said high-speed moving object,
said first communication unit is operable to transmit image data captured by said image capturing unit as the data over radio wave of the first frequency, when the control data is received over radio wave of the first frequency,
said second communication unit is operable to transmit image data captured by said image capturing unit over radio wave of the second frequency, when the control data is received over radio wave of the second frequency, and
said selection unit of said base station is operable to select one image data from a plurality of image data, when there are, among the data, the plurality of image data that have been captured by said identical image capturing unit at the same time, and
said control center includes
a display unit operable to display the received image data or the selected image data, for each of said image capturing unit.

3. The radio transmission system for the high-speed moving object according to Claim 2,
wherein said image capturing unit is operable to add time information indicating a time of the capturing to the captured image data, and
said selection unit is operable to determine whether or not the image data have been captured by said identical image capturing unit at the same time, based on the time information,

4. The radio transmission system for the high-speed moving object according to Claim 3,
wherein said image capturing unit is further operable to add identification information for identifying said image capturing unit to the captured image data, and
said selection unit is operable to determine whether or not the image data has been captured by said identical image capturing unit at the same time, based on the identification information and the time information.

5. The radio transmission system for the high-speed moving object according to Claim 2,
wherein said image capturing unit is operable to add a sequence number to each predetermined unit in the captured image data, and
said selection unit is operable to determine whether or not the image data have been captured by said identical image capturing unit at the same time, based on the sequence number.

6. The radio transmission system for the high-speed moving object according to Claim 5,
wherein said image capturing unit is further operable to add identification information for identifying said image capturing unit to the captured image data, and
said selection unit is operable to determine whether or not the image data have been captured by said identical image capturing unit at the same time, based on the identification information and the sequence number.

7. The radio transmission system for the high-speed moving object according to Claim 2,
wherein said control center further includes
an instruction unit operable to designate said image capturing unit by identification information for identifying said image capturing unit and to instruct said high-speed moving object to capture image by said designated image capturing unit,
wherein said communication unit of said control center is operable to transmit the instruction including the identification information to said first and second base stations via the network,
said first and second communication units of said first and second base stations are operable to add the identification information to the control data and then transmit the control data added with the identification information, and
said first and second communication units of said high-speed moving object are operable to determine the image data to be transmitted, based on the identification information added to the control data.

8. The radio transmission system for the high-speed moving object according to Claim 1,
wherein said first and second communication units of said high-speed moving object are operable to add error-correction data to the data and transmits the data added with the error-correction data, and
said first and second communication units of said first and second base stations are operable to perform error correction for the data using the error-correction data.

9. The radio transmission system for the high-speed moving object according to Claim 1,
wherein said first and second communication units of said high-speed moving object are operable to dispersedly arrange the data per unit predetermined size and transmit the dispersedly arranged image data, and
said first and second communication units of said first and second base stations are operable to re-arrange the dispersedly arranged data into the original arrangement.

10. The radio transmission system for the high-speed moving object according to Claim 1,
wherein said high-speed moving object further includes:
a position detection unit operable to detect a running position of said high-speed moving object; and
a control unit operable to control a characteristic at a time when said first and second communication units transmit and receive the data, based on the detected running position of said high-speed moving object.

11. The radio transmission system for the high-speed moving object according to Claim 10,
wherein said high-speed moving object further includes
a variable attenuate unit operable to adjust output strength of the radio waves to be transmitted by said first and second communication units, and
said control unit is operable to determine the output strength of the radio waves to be transmitted by said first and second communication units based on the detected position of said high-speed moving object, and to control said variable attenuate unit to adjust the output strength to be the determined output strength.

12. The radio transmission system for the high-speed moving object according to Claim 10,
wherein said control unit is operable to determine redundancy of error-correction data for the data based on the detected running position of said high-speed moving object, and to notify the determined redundancy to said first and second communication units of said high-speed moving object,
said first and second communication units of said high-speed moving object are operable to add the redundancy and the error-correction data to the data and to transmit the data added with the redundancy and the error-correction data, and
said first and second communication units of said first and second base stations are operable to perform error correction for the data using the error-correction data.

13. The radio transmission system for the high-speed moving object according to Claim 10,
wherein said control center further includes
a setting unit operable to transmit, to said high-speed moving object, a characteristic table in which the running position of said high-speed moving object corresponds to the characteristic, and
said control unit of said high-speed moving object is operable to control the characteristic at a time when said first and second communication units transmit the data, based on the detected running position of said high-speed moving object and the characteristic table.

14. The radio transmission system for the high-speed moving object according to Claim 1,
wherein said high-speed moving object includes:
a measurement unit operable to measure strength of the radio waves received from said first and second base stations; and
a control unit operable to control a characteristic at a time when said first and second communication units transmit and receive the data, based on the measured strength of the radio waves.

15. The radio transmission system for the high-speed moving object according to Claim 2,
wherein said control center further includes:
a position detection unit operable to detect a position of said high-moving object; and
a control unit operable to perform transmission instruction by instructing said first and second base stations to transmit the control data, based on the detected position of said high-speed moving object, and
said first and second communication units of said first and second base stations are operable to transmit the control data according to the transmission instruction from said control center.

16. The radio transmission system for the high-speed moving object according to Claim 1,
wherein said high-speed moving object includes:
said first directional antenna operable to transmit and receive radio wave in a particular direction, said first directional antenna being connected to said first communication unit, being located at one end part in a moving direction of said high-speed moving object, and facing outside; and
said second directional antenna operable to transmit and receive radio wave in a particular direction, said second directional antenna being connected to said second communication unit, being located at the other end part in the moving direction of said high-speed moving object, and facing outside, and
said first and second base stations include:
a first directional antenna operable to transmit and receive radio wave in a particular direction, said first directional antenna being located at one end part in a longitudinal direction of a station platform where said base station is equipped and facing said first directional antenna of said high-speed moving object; and
a second directional antenna operable to transmit and receive radio wave in a particular direction, said second directional antenna being located at the other end part in the longitudinal direction of the station platform where said base station is equipped and facing said second directional antenna of said high-speed moving object,
said first communication unit of said first base station and the second communication unit of said second base station are connected to said first directional antenna and said second directional antenna of said base station, and operable to transmit control data indicating a transmission timing at predetermined time intervals via said first directional antenna of said base station over radio wave of a first frequency and via said second directional antenna of said base station over radio wave of the second frequency, and to receive data transmitted from said high-speed moving object over radio wave of the first frequency and radio wave of the second frequency and transmit the data to said control center via the network.

17. The radio transmission system for the high-speed moving object according to Claim 1,
said high-speed moving object further includes:
said first directional antenna operable to transmit and receive radio wave in a particular direction, said first directional antenna being connected to said first communication unit, being located at one end part in a moving direction of said high-speed moving object, and facing outside; and
said second directional antenna operable to transmit and receive radio wave in a particular direction, said second directional antenna being connected to said second communication unit, being located at the other end part in the moving direction of said high-speed moving object, and facing outside,
said first and second base stations further include:
a first directional antenna operable to transmit and receive radio wave in a particular direction, said first directional antenna being located at one end part in a longitudinal direction of a station platform where said base station is equipped and facing said first directional antenna of said high-speed moving object;
a second directional antenna operable to transmit and receive radio wave in a particular direction, said second directional antenna being located at the other end part in the longitudinal direction of the station platform where said base station is equipped and facing said second directional antenna of said high-speed moving object;
a third directional antenna operable to transmit and receive radio wave in a particular direction, said third directional antenna being located at back on to said first directional antenna of said base station and facing said second directional antenna of said high-speed moving object; and
a fourth directional antenna operable to transmit and receive radio wave in a particular direction, said fourth directional antenna being located at back on to said second directional antenna of said base station and facing said first directional antenna of said high-speed moving object,
said first communication unit of said first base station and said second communication unit of said second base station are connected to said first directional antenna and said third directional antenna of each of said base station, and operable to transmit control data indicating a transmission timing at predetermined time intervals via said first directional antenna of said base station over radio wave of the first frequency and via said third directional antenna of said base station over radio wave of the second frequency, and to receive data transmitted from said high-speed moving object over radio wave of the first frequency and radio wave of the second frequency and transmit the data to said control center via the network, and
said first and second base stations further include
a third communication unit connected to said second directional antenna and said fourth directional antenna of said base station and operable to transmit control data indicating a transmission timing at predetermined time intervals via said second directional antenna of said base station over radio wave of the second frequency and via said fourth directional antenna of said base station over radio wave of the first frequency, in synchronization with one of said first communication unit and said second communication unit in order to transmit the control data alternately with the control data transmitted by one of said first communication unit and said second communication unit.

18. The radio transmission system for the high-speed moving object according to Claim 1
said high-speed moving object further includes:
a first directional antenna operable to transmit and receive radio wave in a particular direction, said first directional antenna being connected to said first communication unit, being located at one end part in a moving direction of said high-speed moving object, and facing outside; and
said second directional antenna operable to transmit and receive radio wave in a particular direction, said second directional antenna being connected to said second communication unit, being located at the other end part in the moving direction of said high-speed moving object, and facing outside, and
wherein said first and second base stations include:
a first directional antenna operable to transmit and receive radio wave in a particular direction, said first directional antenna being located at one end part in a longitudinal direction of a station platform where said first or second base station is equipped and facing a directional antenna of said high-speed moving object; and
a second directional antenna operable to transmit and receive radio wave in a particular direction, said second directional antenna being located at the other end part in the longitudinal direction of the station platform where said first or second base station is equipped and facing a second directional antenna of said high-speed moving object, and
said first communication unit of said first base station is connected to said first directional antenna and said second directional antenna of said base station, and operable to transmit control data indicating a transmission timing at predetermined time intervals via said first directional antenna of said base station over radio wave of the first frequency and via said second directional antenna of said base station over radio wave of a fourth frequency, and to receive data transmitted from said high-speed moving object over radio wave of the first frequency and radio wave of the fourth frequency and transmit the data to said control center via the network,
said second communication unit of said second base station is connected to said first directional antenna and said second directional antenna of said base station, and operable to transmit control data indicating a transmission timing at predetermined time intervals via said first directional antenna of said base station over radio wave of the third frequency and via said second directional antenna of said base station over radio wave of the second frequency, and to receive data transmitted from said high-speed moving object over radio wave of the third frequency and radio wave of the second frequency and transmit the data to said control center via the network,
said first communication unit is operable to transmit the data over radio wave of a corresponding frequency in the first frequency and the third frequency, when the control data is received over radio wave of one of the first frequency and the third frequency, and
said second communication unit is operable to transmit the data over radio wave of a corresponding frequency in the fourth frequency and the second frequency, when the control data is received over radio wave of one of the fourth frequency and the second frequency.

19. The radio transmission system for the high-speed moving object according to Claim 1
wherein said high-speed moving object further includes:
a third communication unit operable to transmit the data over radio wave of the third frequency, when the control data is received over radio wave of the third frequency;
a fourth communication unit operable to transmit the data over radio wave of the fourth frequency, when the control data is received over radio wave of the fourth frequency;
a first directional antenna connected to said first communication unit and a third directional antenna connected to said third communication unit, each of which is operable to transmit and receive radio wave in a particular direction, located at one end part in the moving direction of said high-speed moving object, and facing outside; and
a second directional antenna connected to said second communication unit and a fourth directional antenna connected to said fourth communication unit, each of which is operable to transmit and receive radio wave in a particular direction, located at the other end part in the moving direction of said high-speed moving object, and facing outside, and
said fist and second base stations include:
a first directional antenna operable to transmit and receive radio wave in a particular direction, said first directional antenna being located at one end part in a longitudinal direction of a station platform where said first or second base station is equipped and facing said first directional antenna of said high-speed moving object; and
a second directional antenna operable to transmit and receive radio wave in a particular direction, said second directional antenna being located at the other end part in the longitudinal direction of the station platform where said first or second base station is equipped and facing said second directional antenna of said high-speed moving object,
wherein said first communication unit of said first base station is connected to said first directional antenna and said second directional antenna, and operable to transmit control data indicating a transmission timing at predetermined time intervals via said first directional antenna over radio wave of the first frequency and via said second directional antenna over radio wave of the fourth frequency, and to receive data transmitted from said high-speed moving object over radio wave of the first frequency and radio wave of the fourth frequency and transmit the data to said control center via the network, and
said second communication unit of said second base station is connected to said first directional antenna and said second directional antenna, and operable to transmit control data indicating a transmission timing at predetermined time intervals via said first directional antenna over radio wave of the third frequency and via said second directional antenna over radio wave of the second frequency, and to receive data transmitted from said high-speed moving object over radio wave of the third frequency and radio wave of the second frequency and transmit the data to said control center via the network.

20. The radio transmission system for the high-speed moving object according to Claim 19,
wherein said high-speed moving object includes a plurality of Units which are connected to one another, said Unit having said first directional antenna, said second directional antenna, said third directional antenna, said fourth directional antenna, said first communication unit, said second communication unit, said third communication unit, and said fourth communication unit,
said directional antenna located at an end part where one of said Unit is connected to another Unit is used for communication between said Units, and
said directional antennae located at both end parts of a whole structure in which the plurality of the Units are connected to one another are used for communication with said first base station and said second base station.

21. The radio transmission system for the high-speed moving object according to Claim 20 comprising
a switching unit operable to select from the first to fourth frequencies a frequency of radio wave to be used for the communication between said Units and to select from said first to fourth communication units a communication unit to be used for the communication between said Units, based on the frequencies of the radio waves used for the communication with said first base station and said second base station, and
said selected communication unit is operable to perform the communication between said Units using radio wave of the selected frequency.

22. The radio transmission system for the high-speed moving object according to Claim 21,
wherein said switching unit is operable to select the frequency of the radio wave and said communication unit which are to be used for the communication between said Units, according to a change of the frequencies of the radio waves and said communication units which are used for the communication with said first and second base stations, and to switch to the selected frequency and communication unit.

23. The radio transmission system for the high-speed moving object according to Claim 21,
wherein said selected communication unit is operable to attenuate transmission output of the radio wave.

24. The radio transmission system for the high-speed moving object according to Claim 20,
wherein two frequencies from the first to fourth frequencies have been previously assigned, as frequencies of the radio wave to be used for the communication between said Units, to each of said high-speed moving objects moving on an inbound line and an outbound line,
comprising a switching unit operable to select a frequency of the radio wave to be used for the communication between said Units from the assigned frequencies and to select a communication unit to be used for the communication between said Units from said first to fourth communication unit, based on the frequencies of the radio waves used for the communication with said first and second base stations, and
said selected communication unit is operable to perform the communication between said Units using radio wave of the selected frequency.

25. A high-speed moving object comprising:
at least one image capturing unit operable to capture image of inside of a car in said high-speed moving object;
a first communication unit operable to transmit the image data captured by said image capturing unit over radio wave of a first frequency, when control data indicating a transmission timing is received from a plurality of base stations installed along a path of movement of said high-speed moving object over radio wave of the first frequency;
a second communication unit operable to transmit the image data captured by said image capturing unit over radio wave of a second frequency, when control data indicating a transmission timing is received from the base stations over radio wave of the second frequency.

26. A base station which relays image data transmitted between a high-speed moving object and a control center that manages a condition of the high-speed moving object, said base station being one of:
a first base station and a second base station installed alternately along a path of movement of the high-speed moving object,
said first base station having a first communication unit operable to transmit control data indicating a transmission timing over radio wave of a first frequency at predetermined time intervals, and to receive the image data transmitted from said high-speed moving object over radio wave of the first frequency and transmit the image data to said control center via a network; and
said second base station having a second communication unit operable to transmit control data indicating a transmission timing over radio wave of a second frequency at predetermined time intervals, and to receive the image data transmitted from said high-speed moving object over radio wave of the second frequency and transmit the image data to said control center via the network.

27. A control center which manages a condition of a high-speed moving object, said control center comprising:
a communication unit operable to receive image data transmitted from the high-speed moving object via a plurality of base stations installed along a path of movement of the high-speed moving object;
a selection unit operable to select one data from a plurality of data, when there are, among the data, the plurality of data having the same information.

28. A radio transmission method for a high-speed moving object, in which image data is transmitted between the high-speed moving object and a control center that manages a condition of the high-speed moving object via a first base station and a second base station that are installed alternately along a path of movement of the high-speed moving object, said radio transmission method comprising:
in the first base station
a first communication step of transmitting data to and receiving data from the high-speed moving object over radio wave of a first frequency and of transmitting data to and receiving data from the control center via the network,
in the second base station
a second communication step of transmitting data to and receiving data from the high-speed moving object over radio wave of a second frequency and of transmitting data to and receiving data from the control center via the network,
in the high-speed moving object
a first communication step of transmitting and receiving data over radio wave of the first frequency and
a second communication step of transmitting and receiving data over radio wave of the second frequency, and
in the control center
a communication step of transmitting the data to and receiving the data from the first and second base stations via the network and
a selection step of selecting one data from a plurality of image data, when there are, among the received image data, the plurality of data having the same information.

29. A construction method of a wireless communication area for constructing the wireless communication area where transmitting and receiving can be performed with a high-speed moving object, said construction method comprising
alternately arranging, along a path of movement of the high-speed moving object, a first wireless communication area where transmitting and receiving can be performed over radio wave of a first frequency and a second wireless communication area where transmitting and receiving can be performed over radio wave of a second frequency, so that the areas are partly overlapped.

30. A computer program embodied on a computer readable medium and executed by a computer for transmitting data between a high-speed moving object and a control center that manages a condition of the high-speed moving object via a first base station and a second base station that are installed alternately along a path of movement of the high-speed moving object, said computer program comprising:
in the first base station
a first communication step of transmitting data to and receiving data from the high-speed moving object over radio wave of a first frequency and of transmitting data to and receiving data from the control center via a network,
in the second base station
a second communication step of transmitting data to and receiving data from the high-speed moving object over radio wave of a second frequency and of transmitting data to and receiving data from the control center via the network,
in the high-speed moving object
a first communication step of transmitting and receiving data over radio wave of the first frequency, and
a second communication step of transmitting and receiving data over radio wave of the second frequency,
in the control center
a communication step of transmitting the data to and receiving the data from the first and second base stations via the network,
a selection step of selecting one data from a plurality of data, when there are, among the received image data, the plurality of data.
